# EUROPEAN PATENT SPECIFICATION

(11) **EP 0 867 347 B1**
(45) Date of publication and mention of the grant of the patent: **07.07.2004**
(21) Application number: 98105023.0
(22) Date of filing: 19.03.1998
(51) Int. Cl.: B60R 21/26, C06D 5/06, C06B 45/00

(54) **Gas generating pellets and gas generator**
Gaserzeugende Tabletten und Gasgenerator
Pastilles génératrices de gaz et générateur de gaz

(30) Priority: 24.03.1997 JP 6982297; 26.12.1997 JP 36053997
(43) Date of publication of application: 30.09.1998
(73) Proprietor: DAICEL CHEMICAL INDUSTRIES, LTD., Sakai-shi, Osaka (JP)
(72) Inventor: Yamato, Yo, Himeji-shi, Hyogo (JP); Takahori, Takeshi, Ibo-gun, Hyogo (JP); Ueda, Masayuki, Yokohama-shi, Kanagawa (JP); Oda, Shingo, Himeji-shi, Hyogo (JP); Iwai, Yasunori, Shijyonawate-shi, Osaka (JP); Nakashima, Yoshihiro, Himeji-shi, Hyogo (JP); Katsuda, Nobuyuki, Himeji-shi, Hyogo (JP); Yamazaki, Masayuki, Himeji-shi, Hyogo (JP)
(74) Representative: Grünecker, Kinkeldey, Stockmair & Schwanhäusser Anwaltssozietät

(56) References cited:
- EP-A- 0 404 572
- EP-A- 0 449 506
- EP-A- 0 759 383
- EP-A- 0 776 796
- EP-A- 0 783 997
- EP-A- 0 800 964
- EP-A- 0 820 971
- WO-A-94/14637
- WO-A-97/02160
- WO-A-97/41007
- DE-A- 3 939 258
- DE-A- 4 019 677
- DE-A- 4 129 541
- DE-A- 4 318 883
- DE-A- 19 520 847
- DE-C- 4 234 276
- GB-A- 2 289 029
- US-A- 4 886 293
- US-A- 5 345 875
- US-A- 5 551 725

## Description

The present invention relates to gas generating composition pellets adapted to supply gas components so as to inflate an air bag system. More specifically, the present invention is concerned with novel pellets formed of a gas generating composition, which are adapted to generate operating gases in an air bag system provided in an automobile, airplane or the like, for protecting passengers from impacts.

Motor vehicles such as automobiles have an airbag system to protect passenger from crashing into dangerous parts that, when a vehicle crashes at high speed, rapidly inflates an airbag with a gas to prevent a passenger from hitting against hard portions inside the vehicle, such as a steering wheel and windshield, due to inertia thus protecting the passenger from getting injured or killed.

Such an airbag system should preferably be able to safely hold the passenger, whatever his or her build (which may vary depending on the passenger's sitting height or whether the passenger is adult or child) or the riding posture (some drivers may cling to a wheel). To meet this requirement, airbag systems have conventionally been proposed which operate to apply as small an impact as possible to the passenger at the initial stage of activation.

JP-A 8-207696 proposes an airbag system that uses two kinds of gas generating capsules to produce a gas in two stages, with the first stage inflating the bag relatively slowly and the second stage causing a rapid gas generation. This system, however, has a complicated structure inside the gas generator, which in turn increases the size of a container and therefore the manufacturing cost.

US-A 4,998,751 and US-A 4,950,458, too, propose airbag systems that have two combustion chambers to burn a gas generating material in two stages to restrict the operation of the gas generator. These systems, however, are complex in structure and not satisfactory.

For example, JP-A No. 3-208878 discloses compositions containing tetrazole, triazole, or metallic salts thereof, and an oxygen containing oxidizing agent, such as alkali metal nitrate, as major components. JP-B No. 64-6156 and JP-B 64-6157 disclose gas generating agents containing metallic salts of bitetrazole compounds containing no hydrogen, as major components.

In addition, JP-B No. 6-57629 discloses gas generating agents containing a transition metal complex of tetrazole or triazole. JP-A No. 5-254977 discloses a gas generating agent containing triaminoguanidine nitrate, and JP-A No. 6-239683 discloses a gas generating agent containing carbohydrazide, while JP-A No. 7-61885 discloses a gas generating agent containing a nitrogen containing non-metallic compound, such as celluloseacetate and nitroguanidine. Further, US-A No. 5,125,684 discloses the use of nitroguanidine as an energy substance that coexists with 15 - 30% of a cellulose-based binder. Also, JP-A No. 4-265292 discloses a gas generating composition obtained by combining derivatives of tetrazole and triazole, oxidizing agent and a slag-forming agent.

With respect to gas generating behaviors and bag inflating behaviors in the conventional air bag systems as described above, it has been believed that the air bag system on the side of a driver seat (hereinafter abbreviated as a "D seat"), in particular, operates with sufficiently safe inflating behaviors, since the passenger in the driver seat is seated in a relatively fixed position. As air bag systems are being widely used, and become normally installed on recent vehicles, however, it has been desired to develop even safer air bag systems to deal with various situations, namely, those suitable for various types of drivers whose sitting heights vary from person to person, or who may drive while holding the steering wheel close to his/her body. The safer air bag systems have been also desired when a child is seated in a cabin seat, such as a passenger seat (hereinafter abbreviated as a "P seat").

Although the air bag systems having the conventional inflating behavior characteristics may be used, technologies for providing safer air bag systems have been desired which can reduce the rate of increase in the initial inflating speed, e.g., reducing the inflating speed of an air bag on the side of the D seat for a period of 10 milliseconds from the start of gas generation, so as to reduce the possibility of injuries due to rapid inflation of the air bag in the initial period, while maintaining sufficient passenger restricting capability after 30 to 50 milliseconds from the start of the gas generation. The similar technologies have been also desired to control gas generating behaviors on the side of the P seat. EP 0 820 971 A2 is not a pre-published document but represents prior art pursuant to Article 54(3) and Article 54(4) EPC with respect to the designated contracting states DE, ES, FR, GB and IT. Said document only discloses pellets having one single hole but not plural holes.

Thus, there has not yet been disclosed a technology for controlling gas generating behaviors, only by gas generating composition pellets, to control the inflating speed of the air bag. It is, therefore, an object of the invention to develop a technology for controlling the gas generating behavior only by means of the gas generating composition pellets, with a simple structure and at low costs.

According to the invention, said object is achieved by the pellets having the features of claim 1 valid for AT, BE, CH/LI, DK, FI, GR, IE, LU, MC, NL, PT and SE. Said object is likewise achieved by the pellets having the features of claim 1 valid for DE, ES, FR, GB and IT. The latter claim 1 takes, according to Rule 87 EPC the disclosure of EP 0 820 971 A2 into account.

Preferred embodiments of the invention are set forth in the dependent claims 2 to 20 which are subordinated to the respective claim 1.

The present invention provides pellets in a specified shape, molded from a gas generating material (composition) and adjusted in its combustion characteristics by the tank test of an air bag inflator (gas generator) including the pellets. The gas generating composition may be specified chemical compositions.

In the present invention, the gas generating composition is adjusted so that, in the tank test, the tank pressure measured at 0.25 x T milliseconds is not higher than 0.20 x P (kPa) and it is used for an air bag apparatus or system.

The invention provides pellets of a gas propellant which are formed in the form of a hollow tube having a single through hole (not for DE, ES, FR, GB, IT) or a tube having a plurality of through holes, in particular 7 throug holes. Alternatively a plurality of hollow tube alligned in a ring in combination is preferable.

The peak of the combustion maximum internal pressure in this gas generator during operation should preferably occur 12-16 milliseconds or more preferably 13-15 milliseconds after the ignition current is supplied. The gas generator gradually discharges the combustion gas of the gas generating material to moderately increase the pressure of the gas generator and the pressure in the tank until 10-20 milliseconds after the ignition current supply at which time the combustion maximum internal pressure peaks. After the pressure in the housing of the gas generator has peaked, a sufficient amount of gas to hold the passenger is rapidly discharged from the gas discharge ports to lower the gas generator inner pressure and at the same time sharply increase the pressure in the tank. As a result, an airbag gas generator is realized, whose operation performance is adjusted such that if a desired tank maximum pressure in the tank test is P (kPa) and a period of time from the start of rising of the tank pressure to the time when the maximum pressure P (kPa) is reached is T milliseconds, the tank pressure measured after 0.25 x T milliseconds will be not higher than 0.25 x P (kPa). With the gas generator with the above operation performance, because the output during the initial stage of operation is limited, the airbag (bag body) accommodated in the module can be prevented from rapidly inflating in the initial stage of operation and applying excess impacts to the passenger. If, however, the tank pressure measured after 0.25 x T milliseconds is not lower than 0.25 x P (kPa), the force with which the bag inflates and brakes open the module is too strong, making it difficult to produce a desired effect of this invention.

The inventors have reached the present invention based on a finding that the initially mentioned problems may be solved by controlling the physical shape of the gas generating pellets into a suitably determined shape.

Pellets of the invention comprising the generating composition (gas propellant) for an air bag system are formed in such a physical form that, in a tank test conducted with respect to a gas generator (inflator) including the pellets, the tank pressure measured at 0.25 x T milliseconds is not higher than 0.25 x P (kPa), in which a given maximum tank pressure is P (kPa) and a period of time taken from the start of rising of the tank pressure to the maximum tank pressure P (kPa) is T milliseconds. It is preferable that the tank pressure measured at 0.80 x T milliseconds is not lower than 0.70 x P (kPa).

"Formed with a hole or holes" means, in the present invention, the form of the gas generating pellets with a through-hole or through-holes. A single pellet may have either one hole or plural holes. When a pellet has just one hole, it is a single-hole form.

A gas generator for an airbag using the gas generating composition pellets according to the invention comprises a housing having a plurality of gas discharge ports, an igniting means provided within said housing, a gas generating means that is ignited by said igniting means to generate a combustion gas, a combustion chamber that includes said gas generating means and a filter means to cool said combustion gas and entrap the combustion residues, wherein an activation performance of said gas generator is characterized so that, in a tank combustion test of the gas generator, the tank pressure measured at 0.25 x T milliseconds will be not higher than 0.25 x P (kPa) when a given tank maximum pressure is P (kPa) and a period of time taken from the start of rising of the tank pressure to the time when the maximum pressure P (kPa) has been reached is T milliseconds.

It is preferable in the tank test that the tank pressure measured at 0.80 x T milliseconds is not lower than 0.70 x P (kPa), the tank maximum pressure P (kPa) is in the range of 110 to 220 (kPa) and a period T in time taken from the start of rising the tank pressure to the time when the tank maximum pressure P (kPa) has been reached is, for example, 30-50 milliseconds.

The use of the inventive pellets guarantees that the airbag gas generator has a simple construction and operates to apply as small an impact as possible to the passenger during the initial stage of its operation and thereafter rapidly inflate the airbag to reliably protect the passenger.

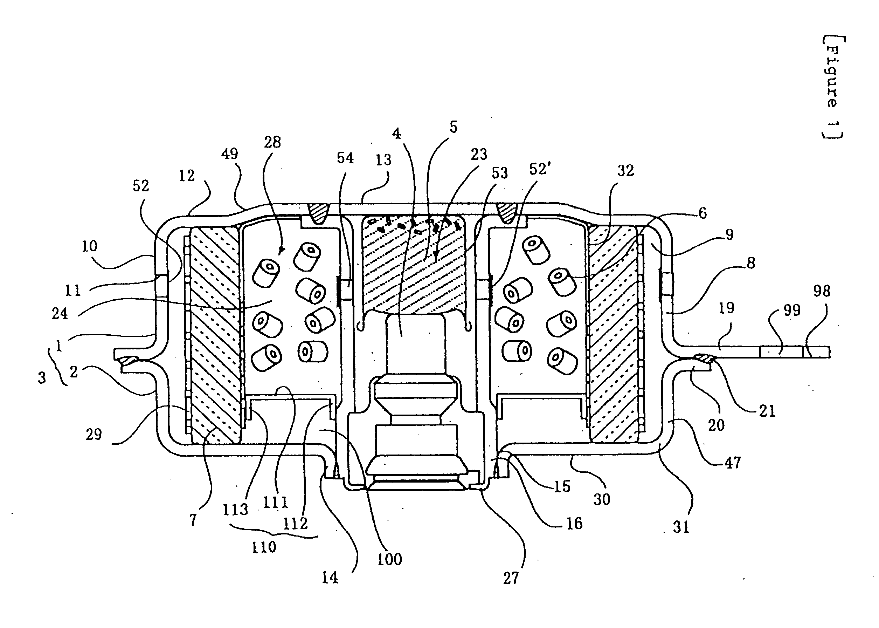

The invention will now be described by way of example and with reference to the accompanying drawings.
[Figure 1]
   A vertical cross section of an embodiment of a gas generator.
[Figure 2]
   A perspective view of a partition member of Figure 1.
[Figure 3]
   A perspective view of another configuration of the partition member.
[Figure 4]
   A perspective view of still another configuration of the partition member.
[Figure 5]
   A perspective view of a further configuration of the partition member.
[Figure 6]
   A perspective view of a further configuration of the partition member.
[Figure 7]
   A perspective view of a further configuration of the partition member.
[Figure 8]
   A vertical cross section of another embodiment of the gas generator.
[Figure 9]
   A vertical cross section of still another embodiment of the gas generator.
[Figure 10]
   A vertical cross section of a further embodiment of the gas generator.
[Figure 11]
   A vertical cross section of a further embodiment of the gas generator.
[Figure 12]
   A vertical cross section of a further embodiment of the gas generator.
[Figure 13]
   A configuration of an airbag apparatus.
[Figure 14]
   A pressure-time curve obtained in a tank test of Example 1.
[Figure 15]
   A pressure-time curve obtained in a tank test of Comparative Example 1.
[Figure 16]
   A vertical cross section of embodiments including embodiment 4 of the gas generator using gas generating composition pellets of the present invention.
[Figure 17]
   A bomb used in the output test of the igniter.
[Figure 18]
   A tank curve of the embodiment 4.
[Figure 19]
   A seal tape having two layers of the embodiment 5.
[Figure 20]
   An example of displacement and arrangement of 7 through holes of gas generating pellets according to the invention.
[Figure 21]
   A tank pressure curve obtained with gas generating pellets having 7 through holes.

The tank test in this invention was performed as follows.

### <Tank test>

An airbag gas generator filled with gas generating propellant is fixed in a SUS (stainless steel) tank with an internal volume of 60 liters, and after the tank is hermetically closed at a room temperature the gas generator is connected to an external ignition electric circuit. A change of increasing pressure in the tank is measured using a pressure transducer separately installed in the tank for a time duration from 0 to 200 milliseconds, with time 0 representing the instant that the ignition electric circuit switch is turned on (an ignition current is supplied). The measured data is then processed by computer to finally generate a tank pressure/time curve used to evaluate the performance of the gas generating material pellets (referred to as a "tank curve"). After the combustion is over, a part of the gas in the tank may be sampled for CO and NOx analysis.

The tank maximum pressure in this invention means a maximum pressure in the stainless steel tank during the tank test, and the combustion maximum internal pressure is a maximum pressure in the housing when the gas generator is activated.

### [Mode for Carrying Out the Invention]

The gas generator with the above performances can be realized in a variety of embodiments such as described in the following.

### (Embodiment 1)

A first preferred embodiment of the gas generator has a combustion chamber in its housing in which a gas generating material is burned. In the combustion chamber, there is a space portion of a predetermined volume that does not contain the gas generating material. During the ignition and combustion of the gas generating material, the volume where the gas generating material burns expands into this space portion to adjust the ignition and combustion timing of the gas generating material.

The space portion in the combustion chamber, for example, can be secured as by putting the solidified gas generating material solidly in either of an upper or lower part of the combustion chamber or by dividing the interior of the combustion chamber with a partition member. The space portion, because it also functions as a space for burning the gas generating material, needs to have a function to communicate with the gas generating material accommodating portion and increase the combustion volume of the gas generating material at a timing of at least ignition or combustion of the gas generating material. Hence, when the interior of the combustion chamber is divided with the partition member to form the space portion, the partition member will be deformed, displaced and/or destroyed, or burned by the combustion of the gas generating material to allow communication of the gas generating material accommodating portion with the space portion.

The partition member that is deformed, displaced and/or destroyed by the combustion of the gas generating material may be formed so that the entire partition member will be deformed, displaced and/or destroyed or only a part of the partition member, such as a pressure receiving surface in contact with the gas generating material, will be deformed, and/or destroyed by the combustion of the gas generating material. The deformation and/or destruction of the whole or part of the partition member by the combustion of the gas generating material can also be achieved by forming a weak portion at some location in the partition member (for example, at a pressure receiving portion, etc.) which is deformed and/or destroyed by the combustion of the gas generating material to allow communication of the gas generating material accommodating portion with the space portion. When the weak portion is to be provided in the pressure receiving surface, it may be formed by providing a hole or holes in the pressure receiving portion, closing the upper part and/or lower part of the hole(s) with a sheet member, and using the part closed by the sheet member as a weak portion. The weak portion can also be formed by providing a groove in the front or back surface of the pressure receiving portion that will break upon combustion of the gas generating material and by using the grooved portion as the weak portion.

When the combustion volume of the gas generating material is to be increased by displacing the partition member to allow communication of the gas generating material accommodating portion with the space portion, it may be realized by arranging the partition member movably in the combustion chamber so that the partition member can be moved (or displaced) toward the space portion side upon combustion of the gas generating material thus increasing the volume of the gas generating material accommodating portion.

Further, this partition member may support the gas generating material on its pressure receiving surface being in contact with the gas generating material so as to prevent the gas generating material from being displaced or shattered into pieces by vibrations.

A first embodiment of the gas generator is illustrated in Figure 1 to 7.

Figure 1 is a vertical cross section of one embodiment of the gas generator.

The gas generator shown in this figure has a housing 3 comprising a diffuser shell 1 and a closure shell 2, the interior of which is divided by an inner cylinder member 16 into two compartments, an ignition means accommodating chamber 23 and a gas generating material combustion chamber 28. The ignition means accommodating chamber 23 accommodates an ignition means that is triggered by impacts to ignite and burn a gas generating material 6 (in this embodiment, an ignition means including an igniter 4 and a transfer charge 5). The combustion chamber 28 accommodates the gas generating material 6 ignited and burned by the ignition means to generate a combustion gas, and an annular partition member 110 that supports the gas generating material 6, and blocks the displacement of the gas generating material 6 and divides the interior of the combustion compartment 28 to form a space portion 100 having no gas generating material. The diffuser shell 1, that can be formed by casting, forging or pressing, is in this embodiment formed by pressing a stainless steel plate. The diffuser shell 1 includes a circular portion 12, a circumferential wall portion 10 formed along the outer circumference of the circular portion 12, and a flange portion 19 extending radially outwardly from the end of the circumferential wall portion 10. The circumferential wall portion 10 has 18 gas discharge ports 11 with a diameter of 3 mm arranged at equal intervals in the circumferential direction and closed by a seal tape 52. The diffuser shell 1 has a raised circular portion 13 formed bulging out at the central part of the circular portion 12 by a reinforcement step 49. The reinforcement step 49 gives a stiffness to the diffuser shell circular portion 12 forming the housing 3, particularly its ceiling portion, and increases the volume of the accommodation space. A transfer charge canister 53 containing the transfer charge 5 is held between the raised circular portion 13 and the igniter 4. The flange portion 19 of the diffuser shell 1 has mounting portions 98 for mounting to mount fittings of a pad module. This mounting portions 98 are arranged 90 degrees apart from one another in the circumferential direction of the flange portion 19 and have mounting holes 99 for screw connection.

The closure shell 2, too, can be formed by casting, forging or pressing as with the diffuser shell 1, and in this embodiment it is formed by pressing a stainless steel plate. The closure shell 2 has a circular portion 30, a center hole 15 formed at the central part of the circular portion 30, a circumferential wall portion 47 formed along the outer circumference of the circular portion 30, and a flange portion 20 extending radially outwardly from the end of the circumferential wall portion 47. The center hole 15 has an axially bent portion 14 along its edge. The axially bent portion 14 imparts a stiffness to the edge of the center hole 15 and provides a relatively large joint surface with the inner cylinder member 16. The inner cylinder member 16 is fitted in the center hole 15. The diffuser shell 1 and the closure shell 2 are combined to form the housing 3 by stacking the flange portions 19, 20 on a horizontal plane crossing a near center of the axis of the housing 3 and welding them together by laser welding 21. These flange portions 19, 20 provide rigidity to the housing, particularly its outer circumferential wall 8, to prevent deformation of the housing due to gas pressure.

This embodiment has installed inside the housing the inner cylinder member 16 of almost cylindrical shape, on the inner side of which is formed the ignition means accommodating chamber 23 and on the outer side of which is formed the gas generating material combustion chamber 28. The inner cylinder member 16 can be formed either by casting, forging, pressing or cutting, or combination of these. When the inner cylinder member 16 is formed by pressing, a UO press method (which involves forming a plate into a U shape, then forming it into an 0 shape, and welding the seam) or an electric resistance welding method (which involves rolling a plate into a cylinder and impressing a large current while applying a pressure to the seam to weld the seam by resistance heat). The end of the inner cylinder member 16 on the side accommodating the igniter 4 is formed with a crimping portion 27 that holds the igniter 4 immovably. The circumferential wall of the inner cylinder member 16 has through holes 54 opening into the combustion chamber 28. In this embodiment six through holes 54 with a diameter of 2.5 mm are at equal intervals arranged in the circumferential direction and closed by a seal tape 52'. In this embodiment, a coolant/filter 7 installed in the housing 1 to clean and cool the gas produced by the ignition and combustion of the gas generating material 6 is arranged to enclose the gas generating material 6 to form an annular chamber around the inner cylinder member 16, i.e., the gas generating material combustion chamber 28. The coolant/filter 7 is formed by radially stacking plain-woven meshes of stainless steel wire and compressing them radially and axially. The coolant/filter 7 formed in this way has its woven loops of mesh collapsed in each layer, and the layers of collapsed mesh loops are stacked in the radial direction. Hence, the coolant/filter 7 has a complex mesh structure and thus offers an excellent arresting capability in addition to the function of cooling the generated combustion gas. In this embodiment, on the outer side of the coolant/filter 7 is formed an outer layer 29 which works as a swell suppressing layer to prevent the coolant/filter 7 from swelling. The outer layer 29 may be formed of a laminated metallic mesh, or a porous cylindrical member having a plurality of through holes in the circumferential wall, or a belt-like swell suppressing layer made by forming a strip of material of a predetermined width into an annular shape. When the outer layer 29 is formed of the laminated metallic mesh, the outer layer 29 can also have a cooling function. The coolant/filter 7 cools the combustion gas generated in the gas generating material combustion chamber 28 and arrests combustion residue. The coolant/filter 7 is prevented from being displaced by an inclined portion 31 formed along the circumference of the circular portion 30 of the closure shell 2. The inclined portion 31 ensures that a space 9 which functions as a gas passage is formed between the circumferential wall 8 and the coolant/filter 7.

On the inner circumference of the coolant/filter 7 is installed an almost cylindrical perforated basket 32 which protects the coolant/filter 7 against flames of the burning gas generating material and prevents direct contact between the gas generating material 6 and the coolant/filter 7.

An electric type ignition means including the igniter 4 and the transfer charge 5 is installed in the ignition means accommodating chamber 23 defined inside the inner cylinder member 16 in the housing 3.

In the gas generating material combustion chamber 28 formed outside the inner cylinder member 16 in the above housing, there is installed, in addition to the gas generating material 6, the partition member 110 that supports the gas generating material 6 to prevent it from being dislocated and divides the interior of the gas generating material combustion chamber 28 into a gas generating material accommodating portion 24 and a space portion 100 with no gas generating material. The gas generating material combustion chamber 28 thus comprises the gas generating material accommodating portion 24 and the space portion 100. The ratio of a volume occupied by this space portion 100 to the combustion chamber 28 is preferably less than 18%. The space portion 100, at least after the start of the combustion of the gas generating material, communicates with the gas generating material accommodating portion 24 to increase the volume where the gas generating material burns.

In assembling the gas generator, after said gas generating material is installed in the gas generating material accommodating portion 24, the partition member 110 is pushed into the combustion chamber 28 so as to support the gas generating material 6. Hence, the partition member 110, as shown in Figure 1, preferably has formed flat its pressure receiving surface 111 in contact with the gas generating material 6, and preferably has its inner circumference 112 and outer circumference 113 bent in a direction that forms the space portion 100, i.e., toward the closure shell 2. Because the partition member 110 evenly supports the accommodated gas generating material 6, the gas generating material 6 can be prevented from being dislocated or from smashed into pieces by vibrations and changing its surface area.

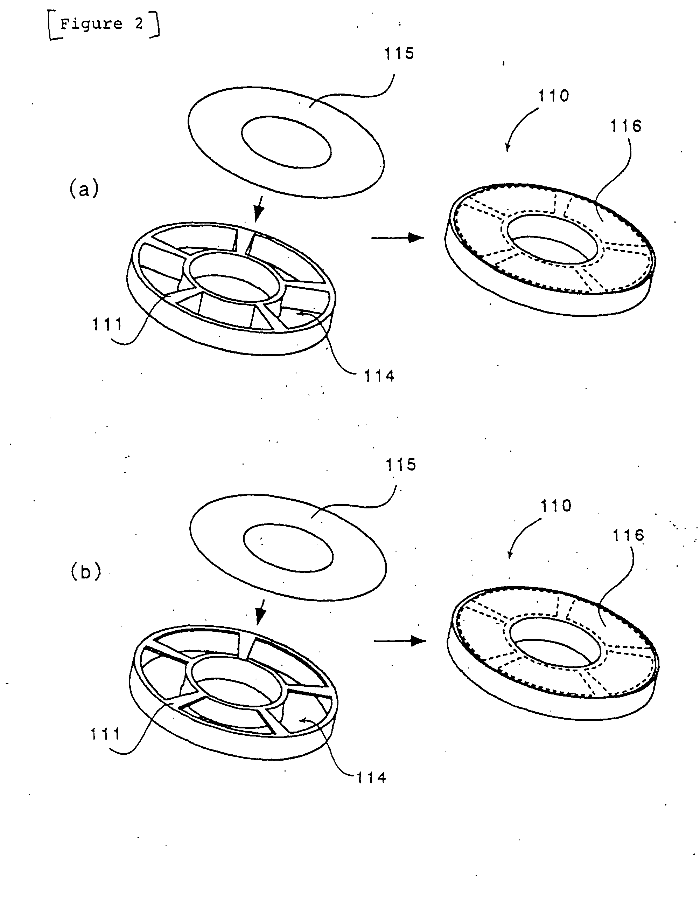

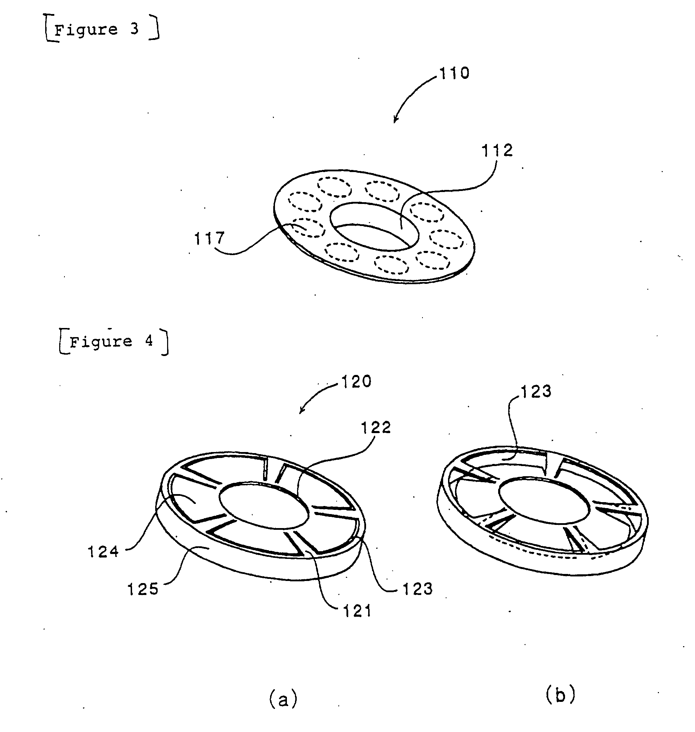

In addition to the structure shown in Figure 1, the partition member 110 may also have constructions as shown in Figure 2(a) and 2(b), in which the contact surface with the gas generating material, i.e., the pressure receiving surface 111 is formed with a hole(s) 114 of an appropriate size; the a hole(s) 114 are closed with a seat member 115 made of metal, plastic or paper that can be fractured by the pressure of the burning gas generating material; and the closed portions are formed as weak portions 116. Figure 2(a) shows a partition member made by casting and Figure 2(b) represents a partition member formed by pressing. The partition member made by the pressing as in Figure 2(b) is advantageous in terms of cost. The weak portions 116 formed in this way are destroyed (or fractured) by the combustion of the gas generating material, allowing communication of the gas generating material accommodating portion 24 with the space portion 100 to increase the volume where the gas generating material burns. The a hole(s) 114 can be closed with the seat member 115 either from above or from below. The seat member 115 may be clamped between the partition member 110 and the gas generating material 6, besides pasting the seat member 115. The a hole(s) 114, besides being fan-shaped, may be formed as a number of almost circular a hole(s) 117 as shown in Figure 3. The partition member shown in Figure 3 has its inner circumference 112 bent into a wall, whose inner circumference 118 holds the inner cylinder member 16, and the partition member can be fixed at a predetermined location in the housing.

The above partition member allows communication of the gas generating material accommodating portion 24 with the space portion 100 defined by the partition member at some timing during the combustion of the gas generating material to increase the volume where the gas generating material burns. The partition member with such a function may also be formed into shapes shown in Figure 4 to 7, in addition to the shapes of Figure 2(a), 2(b) and Figure 3.

A partition member 120 shown in Figure 4(a) has fan-shaped slits 123 in a pressure receiving portion 121 leaving a part close to an inner circumference 122 uncut. In addition to the fan shape, the slits 123 may also be formed into any other appropriate shape and a part 124 enclosed by the slit can be deflected toward the space portion. In this example, the part enclosed by the slits 123 is deflected toward the space portion by the combustion of the gas generating material, as shown in Figure 4(b), virtually expanding and deforming a part of the partition member 120 (in this embodiment, the part enclosed by the slit). As a result, in Figure 1, the gas generating material accommodating portion 24 communicates with the space portion, increasing the combustion volume of the gas generating material. In the partition member 120 shown in Figure 4(a) and 4(b), the outer circumference 125 is bent into a wall so that the partition member can be fitted in the inner surface of the coolant/filter and fixed at a predetermined location in the housing.

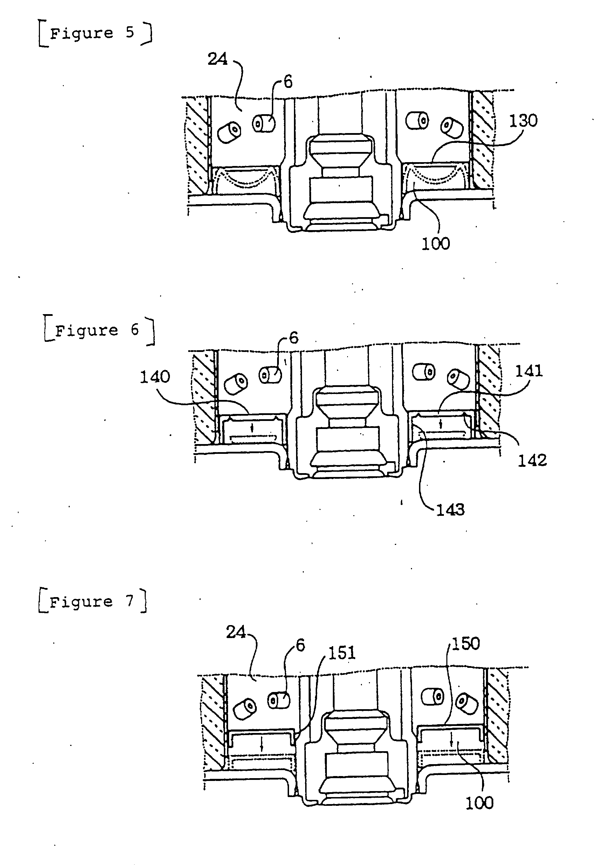

Figure 5 illustrates another example of a partition member 130 that can change its entire shape on combustion of the gas generating material 6. Hence, the partition member 130 supports in this example the gas generating material 6 installed in the gas generating material accommodating portion 24 to define the space portion 100 and is made of a material with its strength, shape and thickness so determined that the partition member 130 collapses when subjected to the pressure generated by the combustion of the gas generating material 6. As a result, the partition member 130 is deformed in its whole shape by the combustion of the gas generating material 6 to increase the combustion volume of the gas generating material.

A further example of a partition member 140 shown in Figure 6 has grooves cut in the back of a pressure receiving surface 141 of the partition member in a depth that allows the pressure receiving surface 141 to be broken by impacts or the increased internal pressure by the combustion of the gas generating material 6. The grooves are formed as weak portions 142 that are broken by the impact or the pressure rise of the combustion of the gas generating material. Upon breakage of these weak portions, the pressure receiving portion moves in a direction of arrow in the figure to allow communication between the gas generating material accommodating portion 24 and the space portion 100. As a result, the combustion of the gas generating material 6 can increase the volume of the gas generating material accommodating portion 24. The weak portions 142 are not limited to the back of the pressure receiving portion 141 and can be formed in the front side of the pressure receiving portion 141 or in a bent leg portion 143 at the inner circumference or outer circumference. The weak portions 142 may be formed in any desired shape as long as it can be cut open by the impact or the pressure rise of the combustion of the gas generating material 6 and thereby increase the volume where the gas generating material burns.

In an example shown in Figure 7, a partition member 150, upon combustion of the gas generating material 6, is displaced (or moved) in a direction of arrow in the figure to increase the volume of the gas generating material accommodating portion 24. In this embodiment, the partition member 150 is fixed by press-fitting its edge portion 151 in the inner cylinder member and supports the gas generating material 6. The burning gas generating material 6 pushes down the partition member 150 toward the space portion 100, i.e., in a direction of arrow in the figure, consequently increasing the volume of the gas generating material accommodating portion 24. Therefore, in this embodiment, the partition member 150 is fixed when the gas generator is not activated and the degree of fixing of the partition member 150 needs to be adjusted so that it can be displaced (or moved) by the impact or pressure rise of the combustion of the gas generating material 6.

In view of a fact that the above partition member is used to increase the volume of the gas generating material accommodating portion 24 at the time of the combustion of the gas generating material, the partition member, rather than being formed in the configurations explained by referring to Figure 2 to 7, may also be formed by using an easily combustible material (such as paper) so that the partition member can also be burned by conbustion by the gas generating material.

### (Embodiment 2)

A preferred second embodiment of the gas generator accommodates in its housing with gas discharge ports an ignition means triggered by impacts and a gas generating material ignited and burned by the ignition means to generate a combustion gas, and is characterized in that the gas discharge ports are closed by a seal tape that is burst at an initial stage of the gas generator operation.

In a gas generator that bursts the seal tape at the initial stage of the operation of the gas generator, when ,by way of revised inner structure, the gas generator generates a gas in two stages and bursts the seal tape at the initial stage of the gas generator activation or, in more concrete terms, when a first-stage combustion gas is generated in an initial stage of the gas generator operation to break the seal tape, followed by a second-stage gas being discharged from the gas discharge ports; the operation performance of the gas generator can be adjusted as described above.

Such a gas generator that generates the gas in two stages can be realized by a gas generator which has said ignition means containing a transfer charge for igniting and burning the gas generating material; which has formed in said housing a first passage through which to pass a combustion gas generated by the combustion of the transfer charge and a second passage through which to pass a combustion gas generated by the gas generating material burned by the combustion gas of the transfer charge; and in which the combustion gas of the transfer charge passing through the first passage is discharged directly. In this gas generator, if a bypass is formed to discharge the combustion gas of the transfer charge directly out of the housing and the bypass is used as the first passage to swiftly bring the combustion gas passing through the first passage to the seal tape (i.e., gas discharge ports), then the seal tape can be broken at the initial stage of the gas generator operation by the combustion gas that has passed through the first passage. The second passage is the one to pass a combustion gas of the gas generating material ignited by the combustion gas of the transfer charge which did not pass through the first passage. The combustion gas of the gas generating material inflates the airbag (bag body) sufficiently. At this time, a greater amount of gas is discharged than the gas that was discharged earlier out of the gas generator through the first passage. The combustion gas passing through the second passage is discharged following the combustion gas that was discharged through the first passage. With this construction it is possible to realize a gas generator that has a tank curve characteristic in a tank test such that if a desired tank maximum pressure is P (kPa) and a period of time from the start of rising the tank pressure to the time when the maximum pressure P (kPa) is reached is T milliseconds, the tank pressure measured after 0.25 x T milliseconds will be not higher than 0.25 x P (kPa) and the peak of the combustion maximum internal pressure occurs 10-20 milliseconds after the ignition current is supplied. It is therefore possible to limit excess impacts on the passenger during the initial stage of the gas generator operation.

The first and second passages may be formed as follows. For example, in the gas generator where an inner cylinder member is installed in the housing to form an ignition means accommodating chamber inside the inner cylinder member and a gas generating material combustion chamber outside the inner cylinder member and where the ignition means installed in the ignition means accommodating chamber contains a transfer charge for igniting and burning the gas generating material; rows of a through hole(s) in the inner cylinder member along its circumference are formed on horizontal planes at different heights and, in order that the gas generated by the combustion of the transfer charge and passing through one of the through hole rows formed on a horizontal plane (or preferably a through hole row formed on a horizontal plane on the diffuser shell side) can be led directly to the filter means without passing through the gas generating material accommodating portion, the interior of the combustion chamber is divided by a partition plate to form the first passage or a pipelike member connecting to the through hole row is arranged to form the first passage. It is also possible to provide an opening in the housing at a predetermined location corresponding to the transfer charge accommodating portion in the ignition means accommodating chamber and to discharge directly the gas produced by the combustion of the transfer charge through the opening. In this case, the opening is preferably closed by a seal tape.

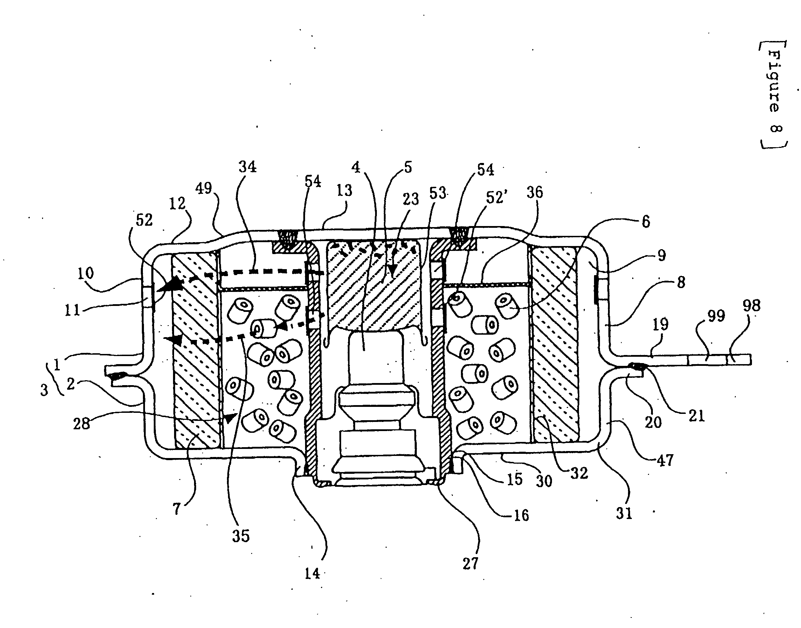

Examples of the second embodiment of the gas generator with the above construction are shown in Figure 8 to 10.

Figure 8 shows a preferred second embodiment of the gas generator.

The gas generator shown in this figure includes: said ignition means containing the transfer charge 5 for igniting and burning the gas generating material 6; and a first passage 34 and a second passage 35, both formed in said housing 3, the first passage 34 passing a combustion gas generated by the combustion of the transfer charge 5, the second passage 35 passing a combustion gas generated by the gas generating material 6 ignited and burned by the combustion of the transfer charge. The combustion gas passing through the first passage 34 is discharged without igniting and burning the gas generating material 6. The gas passing through the first passage 34 swiftly reaches the gas discharge ports 11 (in the initial stage of the gas generator operation), breaks the seal tape 52 that closes the gas discharge ports 11 and is discharged out of the housing 3. In this embodiment, it is possible to use the transfer charge 5 mixed with the gas generating material 6 or to replace the entire transfer charge 5 with the gas generating material 6. In this case, the gas generating material used in place of the transfer charge is distinguished from the gas generating material 6 installed beforehand in the combustion chamber 28. The gas generating material 6 may also have other shapes than the hollow cylinder body shown in Figure 1. Because the gas generator of this embodiment has two passages and the combustion gas passing through the first passage breaks the seal tape 52 to release a small amount of gas out of the housing during the initial stage of the gas generator operation, followed by the release of a large volume of combustion gas through the second passage, the same effect of this invention can be produced even if the gas generating material 6 has other shapes than the hollow cylinder.

Most of the products of the gas propellant is gas. The gas passes through the first passage to break seal tapes. This is the same result as the transfer charge.

In this embodiment, the first passage 34 is formed as a bypass to directly release the gas produced by the combustion of the transfer charge 5 to the outside of the housing 3. As shown in Figure 8, in the gas generator where the inner cylinder member 16 having rows of through a hole(s) 54 in its circumferential wall on horizontal planes at different heights is installed in the housing 3, with the inner side of the inner cylinder member 16 used as the ignition means accommodating chamber 23 and the outer side as the combustion chamber 28 for the gas generating material 6 and where the ignition means including the transfer charge 5 for igniting and burning the gas generating material 6 is installed in the ignition means accommodating chamber; the interior of the combustion chamber 28 may be divided by a partition plate 36 to form the bypass (first passage 34) that can lead the combustion gas generated by transfer charge to the coolant/filter 7 without burning the gas generating material 6, where the combustion gas of the transfer charge 5 is released from a row of a through hole(s) 54' -- any one of the through hole rows formed in the inner cylinder member on horizontal planes at different heights (in Figure 8, on the horizontal plane on the diffuser shell 1 side).

This first passage 34 may also be formed, as shown in Figure 9, by forming several pipelike members 37 radially and integrally extending from the inner cylinder member 16 to introduce directly to the coolant/filter 7 the combustion gas of the transfer charge 5 discharged from one of the rows of a through hole(s) 54 formed on one of horizontal planes.

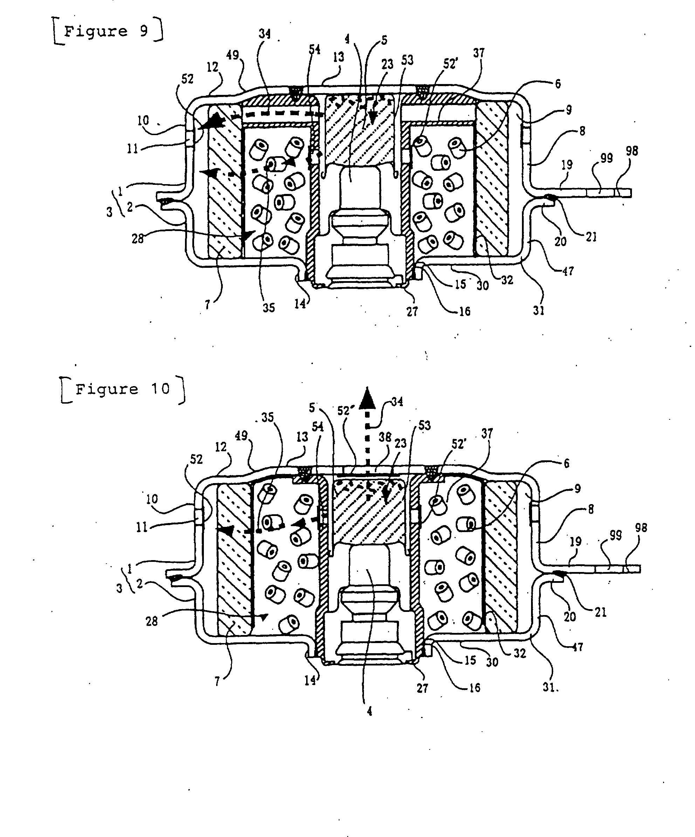

Further, as shown in Figure 10, where the through a hole(s) formed in the inner cylinder member 16 defining the combustion chamber 28 and the ignition means accommodating chamber 23 in the housing are almost aligned horizontally (including the case of through a hole(s) formed in a staggered manner), the housing may be provided with an opening 38 at a location corresponding to the transfer charge in the ignition means accommodating chamber 23 to directly discharge the combustion gas of the transfer charge 5 from the opening 38. In this case, the opening 38 is preferably closed with a seal tape 52".

In the gas generator shown in Figure 8 to 10, the second passage 35 is the one for the combustion gas of the gas generating material 6. The combustion gas of the transfer charge 5 is discharged from the through a hole(s) 54 formed in the area of the inner cylinder member 16 that defines the ignition means accommodating chamber 23 on the inner side and the combustion chamber 28 on the outer side. The combustion gas produced as a result of combustion of the gas generating material 6 is cooled and cleaned by the coolant/filter 7 before being discharged from the gas discharge ports 11.

In the embodiment shown in Figure 8 and 9, the combustion gas of the transfer charge 5 passing through the first passage 34 arrives at the seal tape 52 (i.e., gas discharge ports 11) earlier than the combustion gas of the gas generating material 6 passing through the second passage 35 and breaks the seal tape 52 in the initial stage of the gas generator activation. After this, the combustion gas of the gas generating material 6 ignited and burned by the flames of the transfer charge 5 and passed through the second passage 35 reaches the gas discharge ports 11, from which it is discharged out of the housing 3. In this way the gas is exhausted in two stages.

As a result, if in the tank test the desired tank maximum pressure is P (kPa) and a period of time from the start of rising the tank pressure to the time when the maximum pressure P (kPa) is reached is T milliseconds, these examples of the gas generator of this embodiment have operation performances adjusted so that the tank pressure measured after 0.25 x T milliseconds will be not higher than 0.25 x P (kPa). In Figures 8 to 10 representing this embodiment, the members identical to those of Figure 1 are assigned the same reference numbers and their explanations are omitted.

### (Embodiment 3)

In addition to the embodiment 2, the gas generator that breaks the seal tape closing the gas discharge ports at the initial stage of the gas generator operation can also be realized by a gas generator described below. This gas generator accommodates in the housing having gas discharge ports an ignition means triggered by impacts, a gas generating material ignited and burned by the ignition means to produce a combustion gas, and a filter means to cool the combustion gas and/or arrest combustion residue. In this gas generator, the combustion gas produced as a result of the operation of the ignition means is discharged through the filter means and nothing is provided in the gas passage except for the filter means. The filter means mentioned above includes a filter conventionally provided to clean the combustion gas of the gas generating material, a coolant to cool the gas, and a coolant/filter having the functions of these (i.e., cleaning and cooling of the gas). In the gas generator in which an inner cylinder member is arranged in the housing to define an ignition means accommodating chamber on the inside of the inner cylinder member and a combustion chamber on the outside and in which the ignition means includes a transfer charge for igniting and burning the gas generating material; a coolant support (or coolant support member), which is arranged on the inner side of the filter means to protect the filter means arranged around the combustion chamber against flames of the transfer charge ejected from the through a hole(s) of the inner cylinder member, needs to be formed or simplified so that it does not obstruct the gas passage running from the through a hole(s) to the gas discharge ports. The combustion gas generated by the activation of said ignition means, when the ignition means comprises an igniter and a transfer charge, represents a combustion gas from the transfer charge ignited and burned by the activation of the igniter.

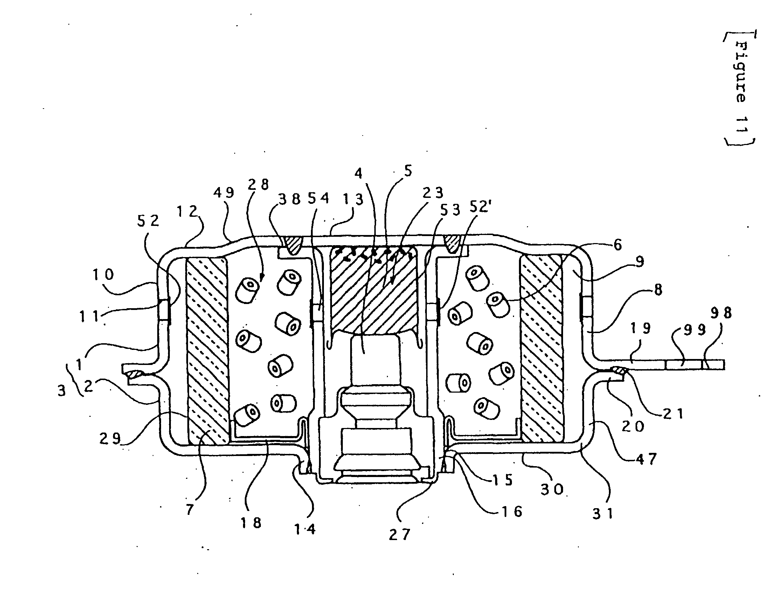

Figure 11 is a vertical cross section of the gas generator as one example of the Embodiment 3.

The gas generator of this embodiment includes in the housing 3 having gas discharge ports 11 an ignition means activated by impacts to generate a combustion gas, a gas generating material 6 ignited and burned by the combustion gas of the ignition means to produce a combustion gas, and a filter means or coolant/filter 7 to cool the combustion gas and/or arrest combustion residue, wherein the combustion gas generated by the activation of the ignition means is discharged directly through the coolant/filter 7 and nothing except for the coolant/filter 7 exists in the combustion gas passage.

Hence, in the gas generator shown in this enbodiment, because the flow of the combustion gas generated by the activation of the ignition means is not obstructed by members other than the coolant/filter 7, the combustion gas quickly reaches the gas discharge ports 11 and breaks the seal tape 52 that closes the gas discharge ports 11 in the initial stage of the gas generator operation.

When the ignition means is formed by combining the igniter 4 triggered by impacts and the transfer charge 5 ignited and burned by the activation of the igniter to produce a combustion gas, as shown in Figure 11, the above-mentioned combustion gas generated by the activation of the ignition means represents the combustion gas generated by the combustion of the transfer charge.

The coolant/filter 7 may use a known filter conventionally used to clean a gas produced as a result of combustion of the gas generating material, a known coolant used to cool the gas, and a means having these two functions (cleaning and cooling of the gas). The coolant/filter 7 can be omitted when the gas generating material used does not produce combustion residue and its gas does not require to be cooled.

In the gas generator shown in Figure 11, the inner cylinder member 16 is installed in the housing 3 to define an ignition means accommodating chamber 23 on the inner side of the inner cylinder member 16 and a combustion chamber 28 on the outer side, and the ignition means installed in said ignition means accommodation chamber 23 includes a transfer charge 5 for igniting and burning the gas generating material. The inner cylinder member 16 has a plurality of through a hole(s) 54 formed therein to pass flames of the burning transfer charge 5 into the combustion chamber 28. The combustion gas (or flames) ejected from the through a hole(s) 54 ignites those pieces of the gas generating material 6 near the gas passage, at the same time reaches the seal tape 52 breaking it at the initial stage of the gas generator operation. The flames of the gas generating material 6 ignited by the combustion gas ejected from the through a hole(s) 54 in turn ignite the surrounding pieces of the gas generating material 6 producing a large amount of combustion gas. The combustion gas produced by the combustion of the transfer charge 5 and the gas generating material 6 now passes through the coolant/filter 7 and through the space 9 formed on the outer side of the coolant/filter 7 and is ejected from the gas discharge ports 11. In this case, the space 9 functions as a gas passage.

In order to fracture or break the seal tape 52, especially at the initial stage of the gas generator operation, which tape closes the gas discharge ports 11, it is necessary in the gas generator shown in Figure 11 that no members that may block the flow of the combustion gas, except the coolant/filter 7, be present in the gas passage through which the gas ejected from the through a hole(s) 54 of the inner cylinder member 16 flows to the gas discharge ports 11.

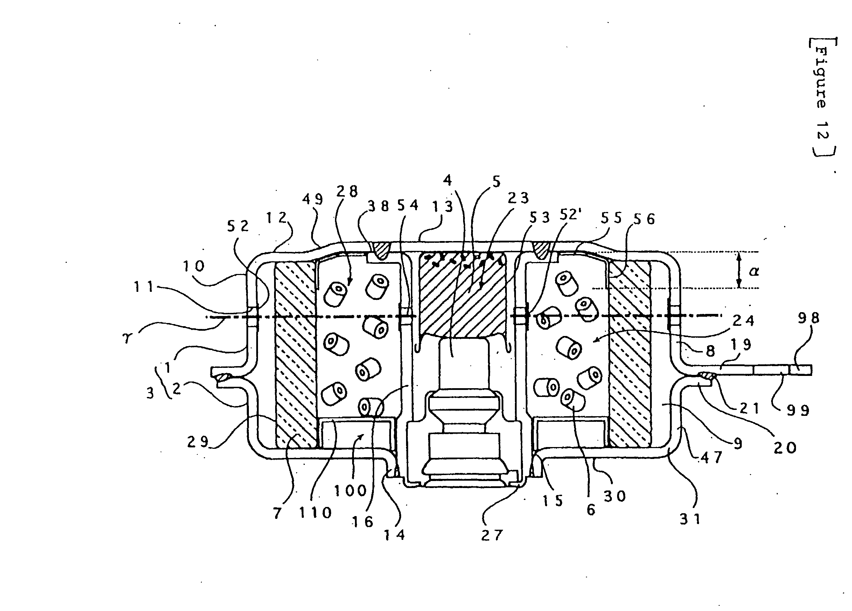

Thus, when a coolant support member 55 is installed on the inner side of the diffuser shell 1 to prevent the displacement of the coolant/filter 7 and also prevent short pass of the combustion gas flowing through a space between the coolant/filter 7 and the inner surface of the diffuser shell 1, a wall surface portion 56 of the coolant support member 55 that contacts the inner surface of the coolant/filter 7 needs to be limited in its length α so that it does not intercept a line γ connecting the through a hole(s) 54 of the inner cylinder member 16 and the gas discharge ports 11, as in the gas generator of Figure 12. The gas generator of Figure 12 divides the interior of the gas generating material combustion chamber by the partition member 110 into the gas generating material accommodating portion 24 and the space portion 100 so that the volume where the gas generating material burns can be expanded into the space portion 100 by the combustion of the gas generating material.

In the gas generator shown in Figure 11 and 12, the combustion gas generated by the transfer charge 5 directly passes only through the coolant/filter 7 and quickly reaches the gas discharge ports 11. Then, the gas breaks the seal tape 52, which seals the gas discharge ports 11, at the initial stage of the gas generator operation and is discharged from the gas discharge ports 11.

The gas generator of this embodiment, too, can have an operation performance such that if in a tank test a desired tank maximum pressure is P (kPa) and a period of time from the start of rising the tank pressure to the time when the maximum pressure P (kPa) is reached is T milliseconds, the tank pressure after 0.25 x T milliseconds will be not higher than 0.25 x P (kPa) and the peak of the combustion maximum internal pressure occurs 10-20 milliseconds after the ignition current is supplied.

In Figure 11 and 12 representing this embodiment, members identical to those of Figure 1 are assigned same reference numbers and their explanations are omitted. In Figure 11, reference number 18 represents an annular underplate that supports the gas generating material 6.

As described in the above embodiment, the gas generator of this invention includes in the housing having gas discharge ports an ignition means activated by impacts and a gas generating material ignited by the ignition means to generate a combustion gas and may also include in the housing, as required, a filter means to cool the combustion gas and/or arrest combustion residue.

The housing having the gas discharge ports can be formed by casting, forging or pressing, and it is preferably formed by welding together the diffuser shell having the gas discharge ports and the closure shell having the ignition means accommodating port. The diffuser shell and the closure shell are joined together by a variety of welding methods, such as electron beam welding, laser welding, TIG arc welding, and projection welding. When the diffuser shell and the closure shell are formed by pressing various kinds of steel plates such as stainless steel plates, the manufacture of these shell becomes easy and less costly. Further, forming the shells in simple shapes, such as cylinder, facilitates the press work. As to the material of the diffuser shell and the closure shell, a nickel-plated steel plate may be used instead of the more-desirable stainless steel plate. It is also possible to install an inner cylinder member in the housing to divide the space in the housing into two or more chambers and install appropriate members in these chambers.

The impact-triggered ignition means is preferably of an electric ignition type that is activated by an electric signal transmitted from an impact sensor that has detected impacts. This electric type ignition means includes an electric sensor that detects impacts by an electric mechanism, an igniter triggered by an electric signal transmitted from the electric sensor that has detected impacts, and a transfer charge ignited and burned by the igniter operation. The electric sensor, for example, may be a semiconductor acceleration sensor, which has four semiconductor strain gauges on a beam of silicon substrate that deflects upon being applied with acceleration, these semiconductor strain gauges being bridge-connected. When acceleration is applied, the beam deflects creating strains on the surface, which in turn changes resistance of the semiconductor gauges to produce a voltage signal proportional to the acceleration. The electric type ignition means may also include a control unit having an ignition decision circuit. In this case, a signal from the semiconductor acceleration sensor is sent to the ignition decision circuit and when the impact signal exceeds a predetermined level, the control unit starts a sequence of calculations. When the result of the calculations exceeds a predetermined value, the control unit outputs a trigger signal to the gas generator.

When combustion residue is produced as a result of combustion of the gas generating material, the filter means that is installed in the housing as required is installed in order to remove the residue and/or cool the combustion gas. When a gas generating material that does not produce residue is used, this filter means can be eliminated. This filter means is in many cases almost cylindrical and arranged on the outside of an area where the gas generating material is installed. Such a filter means may be a filter conventionally used to clean a generated gas and/or a coolant to cool the generated gas, or a laminated wire mesh filter that is formed by rolling wire meshes of an appropriate material into an annular laminated body and compressing it. In more concrete terms, the laminated wire mesh filter can be made by forming a plain-woven stainless steel wire mesh into a cylindrical shape, repetitively folding repeatedly one end portion of this cylinder outwardly to form an annular laminated body, and compressing this laminated body in a mold, or by forming a plain-woven stainless steel wire mesh into a cylindrical shape, pressing this cylindrical body in a radial direction to form a plate body, rolling in many times the plate body into a multi-layered laminated cylindrical body, and compressing it in a mold. The materials for the wire meshes include such stainless steels as SUS304, SUS310S, and SUS316 (JIS Standard). SUS304 (18Cr-8Ni-0.06C), an austenite stainless steel, exhibits an excellent corrosion resistance. This filter means may also have a two-layer structure in which a laminated wire mesh body is provided on the inner or outer side of the filter means. The inner layer may have a function of protecting the filter means against flames produced by the ignition means and ejected toward the filter means and against the combustion gas from the gas generating material ignited and burned by the flames from the ignition means. The outer layer can work as a swell supressing means to block the filter means from swelling due to the gas pressure produced by the activation of the gas generator and thereby prevent the filter means from closing the space between the filter means and the housing circumferential wall. The function of keeping the filter means from swelling can also be realized by supporting the outer circumference of the filter means with the outer layer constructed of a laminated wire mesh body, a porous cylindrical body or an annular belt body.

### (Embodiment 4)

As described above, the gas generator (inflator) is adjusted to have such an activation performance that, when the given tank maximum pressure is P (kPa) and a period of time taken from the start of rising of the tank pressure to the time when the maximum pressure P (kPa) has been reached is T milliseconds, the tank pressure measured at 0.25 x T is not higher than 0.25 x P (kPa) milliseconds. The tank pressure rises abruptly at a point in 10-20 seconds after the ignition current has been supplied and the internal maximum combustion pressure has appeared. This way a curve of the tank pressure (tank curve) appears like S-letter in the tank test. This activation performance is more improved by breaking a shielding means swiftly or quickly which intercepts the gas generating material from the outside of the housing for example by increasing the output pressure of the ignition means.

For example, a seal tape to seal the gas discharge ports formed in the housing is proposed as the above shielding means. In this embodiment a seal tape of 50 mm thickness, made of aluminaum tape, may be used, which can be broken at the initial stage of activation of the gas inflator, at the ambient temperature, for example, at 20 °C., within 3 secs. after the ignition current has been applied. This way the gas is discharged and the tank curve rises.

The rapture or breaking of the shielding means may include in the meaning a physical deformation such that a shielding means, such as seal tape, provided to close gas discharging ports and keep the gas propellant off moisture of the outside while the gas pressure in the housing of the inflator is increasing, can no longer support the pressure and breaks. In addition it means coming-off of the shielding means attached at the given site thereby to open the ports and connect the inside of the housing in air with the outside. The shielding means is attached to the gas-discharging ports to have a suitably large margin and keep the inflator off outside moisture. If the margen is too small, for example, it will be pushed out and come off because it no longer supports the inside pressure of the housing getting more increased, so that the inside of the housing will be connected in air with the outside. Such a coming-off of the seal tape from the ports should be included in the rapture of the shielding means.

Such an inflator can be worked by comprising a single ignition means in the housing having gas discharge ports to be activated by an impact, a gas generating material to be ignited by the ignition means and generate a combustion gas. The ignition means can be embodied with an inflator including an igniter having an output pressure being not lower than 4,9 MPa (700 psi), preferably in the range of 7 to 10,5 MPa (1000 to 1500 psi), at the normal, ambient temperature (20 °C) when the igniter itself is only burnt in an air-tight bomb or bombe (a pressure container made of a metal) having an internal volume of 10cc.

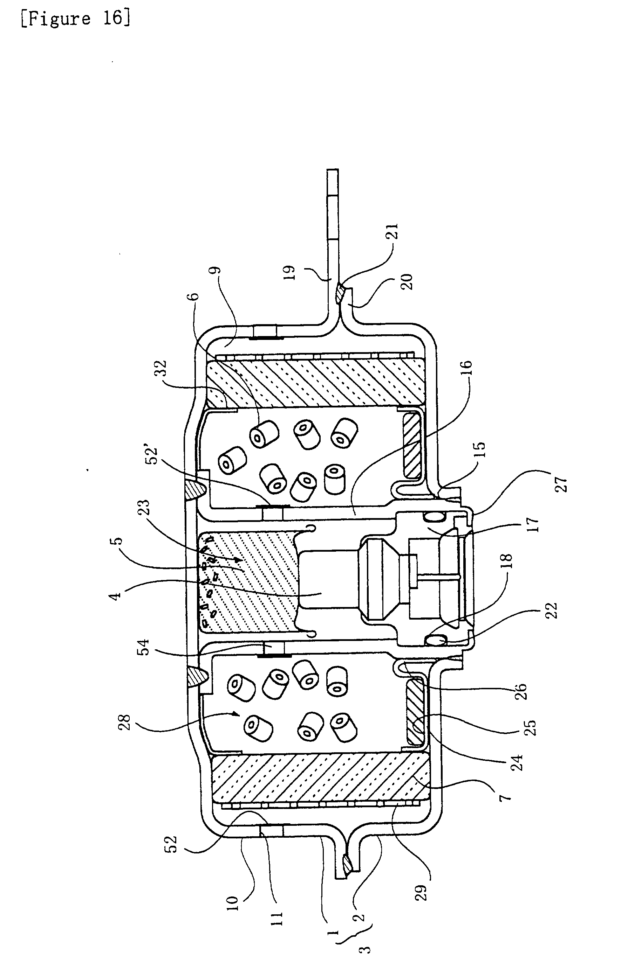

Figure 16 shows a preferable example of Embodiment 4.

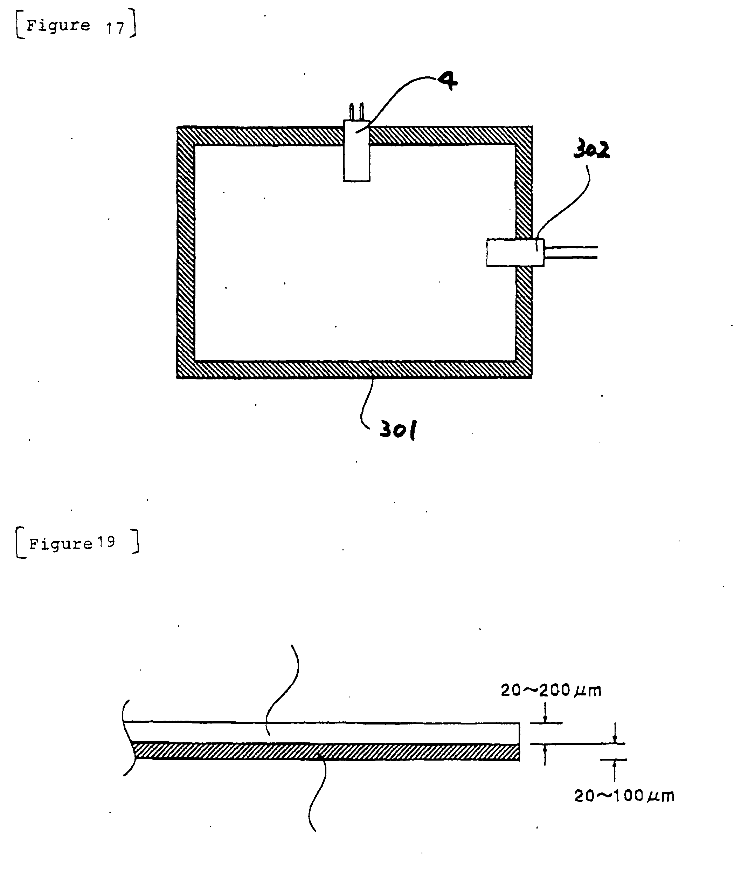

In Figure 16, the inflator comprises a single ignition means in the housing having gas discharge ports to be activated by an impact and a gas generating means to be ignited by the ignition means, be burnt and generate a combustion gas. The ignition means comprises a transfer charge 5 and an igniter 4. The above S-shaped curve can be attained by using the igniter having an output of not lower than 4,9 MPa (700 psi) at the ambient temperature, preferably 7 to 10,5 MPa (1000 to 1500 psi), when it is burnt inside the airtight bomb 301 having an internal volume of 10 cc at 20°C, as shown in Figure 17, and discharging the gas by breaking the seal tape and discharge the gas within 3 milliseconds. The output pressure of the igniter 4 can be measured with a manometer 302 installed in the airtight bomb. An igniter 4 having so high an output comprises 260 to 280 mg of chemicals (ZPP) made of zirconium and potassium perchlorate. The housing is provided with ,for example, 16 gas discharge ports 11 having an inner diameter of 2.7 mm alligned at the circumferential direction.

The inflator of this embodiment having the igniter having so high an output can quickly increase the internal pressure of the housing caused by thermal expansion of the internal air of the housing by increasing the output of the igniter. It then can break the seal tape 52 closing the gas discharge ports of the housing within 3 milliseconds, for example, at 2.5 milliseconds, after the ignition current has been supplied. The seal tape 52 breaks out when flame from the transfer charge is passing the gas generating material, that is, the combustion material has started burning. This will temporarily discontinue the combustion of the material and eventually attenuate the rising of the internal pressure for a moment. The tank pressure will, however, start rising with a small amount of gas discharged into the tank. Then, the flame has passed the whole gas generating material and the material is burnt to generate a large amount of gas. Accordingly, this way of combustion produces an S-shaped tank pressure curve such that the tank pressure measured at 0.25 x T (ms) is not higher than 0.25 x P (kPa) and then enables the air bag to inflate so mildly at the initial to keep a passenger off an impact. It immediately produces a sufficient amount of gas and will hold a passenger firmly. In this tank test, the tank pressure curve starts rising within 3 milliseconds and the pressure at 0.25 x T milliseconds ranges from 7 % to 25 % of the maximum tank pressure P.

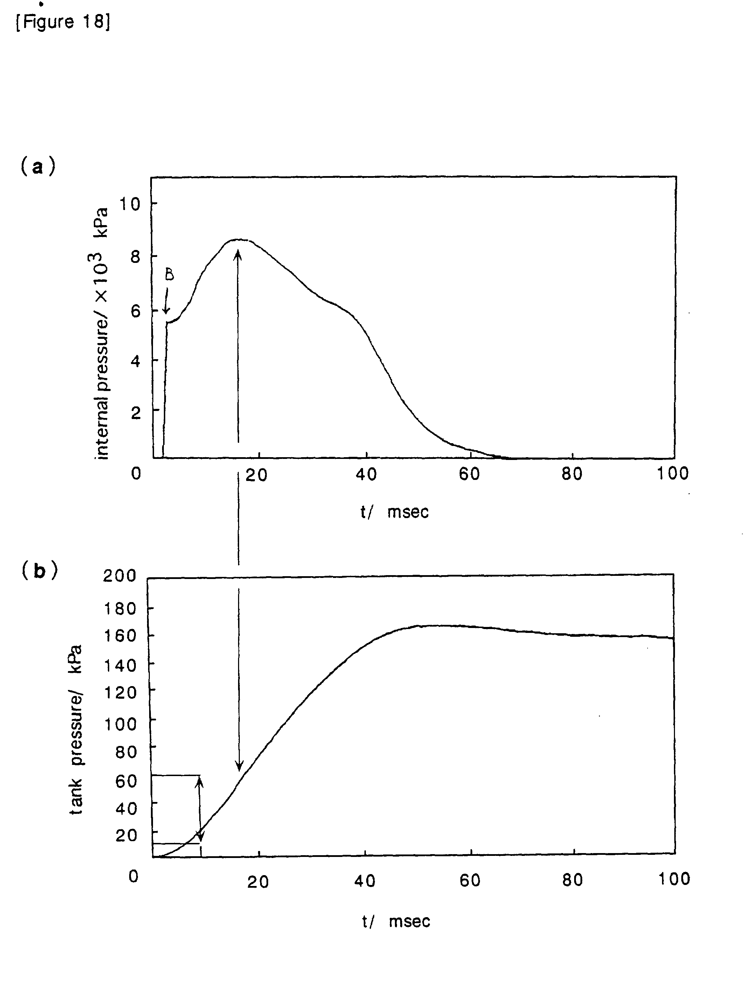

Results of the tank test for this inflator is shown in Figure 18. Figure 18a shows changes of the internal pressure of the housing with time in the tank test. Figure 18b shows tank pressure curves in the tank test. This tank test shown in Figure 18 indicates combustion result of 60 L tank of an inflator including an igniter having an output of 1300psi. As shown in Figure 18, the internal pressure of the inflator rises so that it may break the seal tape at 2.5 milliseconds after ignited. The tank pressure at 10 milliseconds may be 10 to 60 kPa, preferably 20 to 50 kPa. It is at this moment that the flame from the transfer charge has just started passing the gas generating material. Releasing of the internal pressure at this time together with breaking of the seal tape will temporarily discontinue the combustion of the gas generating material and accordingly will attenuate the increase of the internal pressure. The gas released will increase the tank pressure. Then an inflection point will appear when the internal pressure of the inflator has reached the maximum.

In this embodiment, the internal pressure of the inflator is raised initially by increasing the output of the initiator and therefore an S-shaped, tank-output curve having a given inflection point may be obtained. In this case, the increase of the output of the initiator may be caused primarily by heat which does not affect the ignition activity of the gas propellant (gas-generating material) and can quickly raise only the internal pressure at the initial stage. On the contrary, B/KNO₃ (boron niter), used as a prior transfer charge, has a difficulty in obtaining a desired the output S-shaped curve. Because it produces a heat residue at combustion and for this reason an increased amount of this transfer charge will increase the ignition activity to the gas propellant by heat residue of this kind. To obtain the desired tank output S-shaped curve by the transfer charge, a transfer charge generating primarily gas or heat at combustion may be used and it is possible to increase an output of the ignition means by an increased amount of such a transfer charge.

An example of the above shown transfer charge to generate primarily gas or heat at combustion is a non-azide gas generating material, basically comprising nitroguanidine/ammonium nitrate.

In Figures 16, the explanation of the same numerial references as in Figure 1 are omitted here.

### (Embodiment 5)

The inflator which includes a quickly breaking seal tape, as shown in the embodiment 4, for example to break at the ambient temperature of 20°C within 3 milliseconds after the ignition current has been applied, may be realized by adjusting the thickness of the seal tape to seal the gas discharge ports and/or the inner diameter of the gas discharge ports, besides an increased output of the iginition means.

The inflator will be described in reference to the embodiment shown in Figure 16. In this Figure, the gas discharge ports 11 formed in the housing 3 of the inflator are sealed by the seal tape 52 which is adjusted in its thickness so that it may break within 3 milliseconds and discharge the combustion gas after the ignition current supplied. The rapture of the seal tape 52 within 3 milliseconds after the ignition current supplied and the gas-discharging temporarily discontinue the combustion of the gas propellant, which has already started burning, and then the rising of the internal pressure for a moment. The tank pressure, the other hand, starts rising by a combustion gas discharged by the transfer charge. And after that, flame passes the whole gas propellant to generate a large amount of gas and provide the inflator with the activation performance described above.

The igniter 4 may be a conventional igniter with a normal output.

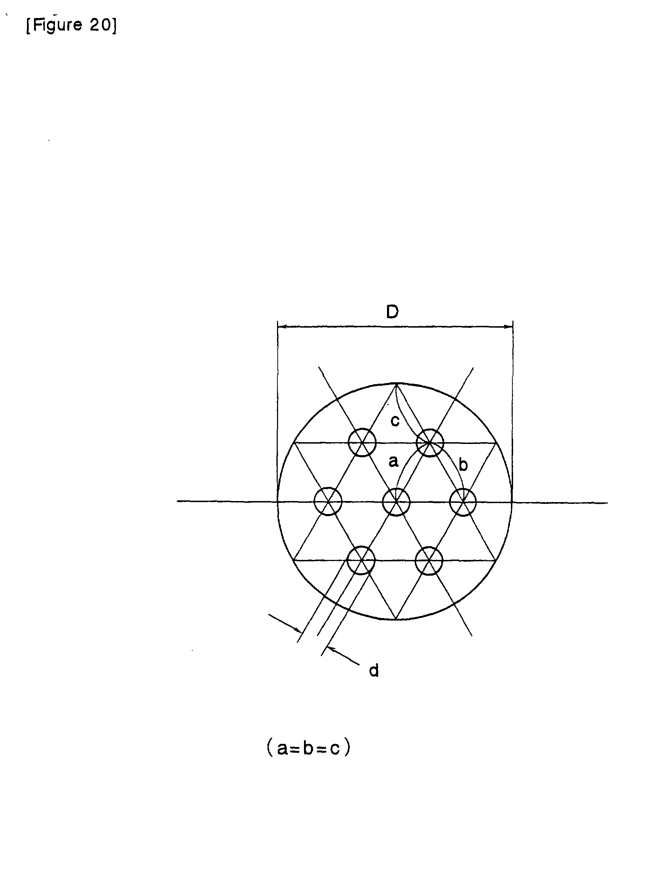

Figure 19 shows a cross section of the seal tape 52. The seal tape 52 consists of a sealing layer 303 which prevents moisture from entering into the housing and an adhesive layer 304 to attach the seal tape to the housing. The sealing layer has a thickness of 20-200 µm, preferably formed from an aluminum foil or other metal foil, more preferably a metal foil laminated with a resin sheet thereon. In case the sealing layer is not thicker than 20 µm, it may be broken by physical touches during assembling or transporting. The sealing layer has preferably a thickness of about 50 µm in order to break in time as desired. And the adhesive layer may have a thickness of 20-100 µm, comprising adhesives such as a pressure-sensitive adhesive and a hot-melt adhesive. An acrylic adhesive is more preferable. The adhesive layer normally extends over the surface of the sealing layer as shown in Figure 19. It may be not applied on the corresponding surface to the ports.

Further, the activity performance of the inflator is further improved by using an igniter having a high output as described in Embodiment 4.

It is also possible to adjust the inner diameter of the above gas discharge ports so that the seal tape which closes the ports may be broken within 3 milliseconds at 20° C after the ignition current supplied. In this case, the above inner diameter of the gas discharge ports 11 may be in the range of 1.5 to 10 mm, depending on the output pressure of the igniter 4 as well as the seal tape in way of material and thickness.

This way the seal tape is broken by the the internal pressure of the housing of the inflator raised by the combustion gas generated after ignition of the gas propellant and then the combustion gas is discharged outwards from rips of the seal tape.

It may be required to set a breaking pressure in a certain range of which the seal tape will break. It is feasible to break the seal tape within 3 milliseconds after the ignition current has been applied and discharge the gas by setting the breaking pressure in a desired range. For example it can be attained by changing the thickness of the seal tape and the diameter of the gas discharging ports. When the seal tape has a constant thickness, the larger the diameter of the ports is, the smaller the breaking pressure. When the ports have a constant diameter, the smaller the thickness of the seal tape is, the smaller the breaking pressure is. A given breaking pressure may this way depend on combination of both thickness of the seal tape and diameter of the ports.

This breaking pressure may be set at not higher than 100 kg/cm², preferably 70-40 kg/cm². To obtain this pressure, a relation between a diameter of the nozzle(s) and a thickness of the seal tape may be such that for a seal tape of a soft aluminum having a thickness of 50 µm, a diameter of the nozzles is 1.5-3 mm; for a seal tape having a thickness of 100 µm, a diameter of the nozzles is about 4 mm; and for a seal tape having a thickness of 200 µm, a diameter of the nozzles is about 10 mm.

If the pressure is too small, the ignition may become unstable. If the pressure is too large, the ignition for the gas propellant may proceed too fast. This way it will be difficult to obtain the desired tank pressure characteristics.

The breaking pressure can be determined with a manometer equipped in an inflator to measure the internal pressure of the housing. The internal pressure of the housing is measured with time as zero standard when current has been applied to the igniter. Figure 18a is a pressure curve showing the relation between the internal pressure and time. Since the shielding means such as seal tape has been attached to the gas-discharging ports with a suitable margin, it will not immdiately be broken or distroyed even though the internal pressure of the housing has started rising. It can support a certain amount of an increased pressure. This resistance to the pressure continues for a limited period in time. At a certain point in time it no longer continues against the increased pressure, the shielding means will be broken or distroyed and the internal pressure of the housing will be released. The release of the pressure will cause change of the internal pressure of the housing and eventually a rapid change of combustion performance of the gas propellant. In changing of the internal pressure of the housing with time, it sharply changes at a certain point in time after it has rised continuously. This point is Point B in Figure 18a where the seal tape has been broken and distroyed. If an increased tank pressure appears before this point, it should be taken for an accidental breaking of seal tape, not caused by the increased internal pressure of the housing. There may be a point in a pressure-time curve where a change of the combustion internal pressure with time may happen to be found like a change from a linear line to a non-linear line in course that the gas is being produced after the ignition, though it is not seen to be sharp. This point should be taken also for a point when the seal tape has been broken. It is seen that the seal tape breaks by the pressure of the produced gas and the internal pressure of the housing is released, followd by a different changing of the pressure from before. This point happens to appear in the combustion internal pressure with time.

### (Embodiment 6)

The inventors have found, in their further research, that, by providing the inflators shown in the above Embodiments 1-5 with at least two kinds, in combination, of gas discharge ports having different inner diameters and/or opening areas from one another. when they form them in a diffuser shell of the housing, the rupture of the seal tape at the initial stage and the above proposed tank pressure S-shaped curve by the rupture can be attained stably and repeatedly. This inflator may be formed, for example, by providing a diffuser shell with gas discharge ports having the larger diameter and those having the smaller and then closing them by seal tapes.

Forming ports having the larger diameter and the smaller diameter, a ratio of the larger to the smaller may be suitably from 4/1 to 1.1/1. A ratio in opening area of the larger to the smaller may be chosed within the range of 97/3 to 3/97.

Specific examples of the above will be explained. A housing of the inflator shown in Figure 16 is provided with 5 gas discharge ports with the larger inner diameter of 6 mm and 15 gas discharge ports with the smaller inner diameter of 3 mm at the circumferential direction at equal intervals, which have been closed by seal tapes. In activation of this inflator, the seal tapes on the ports having the larger inner diameter of 6 mm can break at the initial stage, but those on the ports having the smaller diameter can break at a stage where the internal pressure has been further raised with progressive combustion. In the case where two kinds of gas discharge ports having the larger diameter and the smaller have been formed, the whole opening area of these ports is almost equal to the whole opening area of 20 gas discharge ports having a inner diameter of 4 mm. Since the ports having the larger inner diameter of 6 mm have a larger diameter than the latter case and the number thereof is smaller than the latter case, they can be more easily broken than the case of 20 ports having an inner diameter 4 mm. In addition, all the whole ports can be comparatively fragile. After the seal tape having closed the ports having the larger diameter has been broken, the internal pressure of the housing rises along with the subsequent combustion of the gas generating material and the seal tape having closed the smaller ports will be broken. This way all seal tapes on the ports having the larger diameter can be broken comparatively repeatedly. Then the combustion pressure of the gas propellant gets relatively more stable at the time the seal tape having covered nozzles having the smaller diameter breaks by an increased inner pressure. This is the reason the desired tank output S-shaped curve can be obained repeatedly.

On the other hand, in the inflator with 20 gas discharge ports having an inner diameter of 4 mm, all the ports will not always be broken at a time at the initial stage of combustion of the gas propellant,but the seal tapes will break differently from one another. In other words, the combustion gas tends to blow concentratedly firstly toward the opened gas ports at the time the seal tape in question has been broken. This will affect the way of the subsequent combustion of the gas propellant in view of gas pressure and re-producibility of the tank output curve will be difficultly obtained.

Therefore, as described above, formation of two kinds of gas ports having the larger diameter and the smaller diameter enables almost all the seal tape closing the ports having the larger diameter to be broken and eventually the opening area obtained at this time will be constant. Then this will be constantly working to combustion of the gas propellant until the ports having the smaller diameter are opened. The inflator of the invention can be provided this way with a stable activity performance necessarily having an S-shaped tank output curve.

As above described, the inflator can be activated more stably even at a low temperature by being provided with a plurality of gas-discharging ports having different diameters. An inflator installed in an air bag system of a car has to be exposed to different ambient temperatures depending on local districts. It is known in general that gas propellants burn more mildly at a lower temperature than at the normal temperature. For this reason the internal combustion pressure of the inflator gets smaller on the whole, the maximum output of the activation of the inflator gets smaller than at the normal temperature and rising of the internal tank pressure is retarded. The inflator works different ways at a low temperature.

An inflator may be provided with a plurality of kinds of nozzles having different diameters to be useful at a low temperature. The case of two kinds of ports will be explained. The seal tapes covering the kind of the ports having the lower breaking pressure and the larger diameter can be only broken at a low temperature. At the normal temperature both will be broken. At a low temperature, the combustion internal pressure gets lower than at the normal temperature and an opening area of the ports can be decreased according to this embodiment, the combustion internal pressure can be prevented from further decreasing and this way the same activation performance of the inflator can be obtained as at the normal temperature. When 3 kinds of ports having different diameters are used, the combustion internal pressure is increased at a high temperature according to the above described mechanism and the inflator can be prevented from having too strong an activation performance. The number of kinds of ports may be increased to have more kinds of activation performances. The inflator can be activated at different ambient temperatures in the same way as at the normal temperature.

The above embodiment includes two kinds of nozzles having two diameters. Three kinds of ports or nozzles having three or more diameters, respectively, are proposed. It is preferable in this case that two kinds of nozzles existing adjacent to each other in terms of nozzle's diameter meet the above shown ratio in diameter of the larger to the smaller ranging from 4/1 to 1.1/1 and a ratio in opening area of the larger to the smaller ranging from 97/3 to 3/97.

The gas generating composition pellets for an air bag system of the present invention are characterized in that the pellets are controlled so that, in a tank test conducted with respect to a gas generator including the pellets, the tank pressure measured at 0.25 x T milliseconds is not higher than 0.25 x P (kPa), preferably not higher than 0.20 x P (kPa), where a given maximum pressure of the tank is P (kPa) and a period of time taken from the start of rising of the tank pressure to the time when the maximum tank pressure P (kPa) has been reached is T milliseconds.

The pellets are preferably controlled so that the tank pressure measured at 0.80 x T milliseconds is not lower than 0.70 x P (kPa).

If the tank pressure measured at 0.25 x T milliseconds exceeds 0.20 x P (kPa), particularly 0.25 x P (kPa), the air bag inflates too vigorously at the initial stage. If the tank pressure measured at 0.80 x T milliseconds is not lower than 0.70 x P (kPa), the air bag system can more firmly ensure the safety of passengers upon collisions of automobiles or the like.

While the gas generating pellets of the present invention have the features as described above, one characteristic of their physical shape is that each pellet has a hole having the inside diameter d that is in the range of 0.2 - 1.5 (mm), and the value L/d is 3.0 or larger. The pellets having the holes are shaped in this manner so as to suitably control the proportion of the inner surface area that is initially ignited, relative to the entire inner surface area of the inner wall portion of each pellet, when the pellets are ignited or fired due to the thermal energy of the igniting system. The portion of the pellet that was not ignited in the initial period is brought into a burning condition immediately after this initial period, due to heat generated by the initially ignited portion. Thus, only the initial ignition stage can be controlled without increasing the time required to reach the maximum pressure. In this respect, the technology of the present invention is fundamentally different from a so-called power-diminishing technology (depowering technology) wherein the gas generating power as a whole is slightly reduced so as to control the ignition condition in the initial stage.

While the pellets with holes according to the present invention may be in a single-hole form, or may be formed in any shape provided that an aggregate of the pellets each having a small hole can achieve a desired result in controlling the ignition condition, the pellets are preferably in the single-hole form in view of the cost for forming the pellets. The inside diameter d of the hole is generally 0.2 to 1.5 mm, preferably, 0.4 to 1.0 mm. If the diameter d is less than 0.2 mm, an insufficient area of the inner surface of the pellet is initially ignited due to the thermal energy of the igniting system, and the desired result cannot be obtained. If the diameter d exceeds 1.5 mm, the thermal energy reaches the entire inner surface of the pellet, resulting in an increased combustion area in the initial ignition period, and the amount of the gas generated by the pellets cannot be desirably controlled.

The value L/d of each of the pellets with holes of the present invention is controlled to be 3.0 or larger. This value should be suitably determined depending upon the size of a container filled with the gas generating pellets, since a filling efficiency of the container reduces if the value L is too large. Thus, the value L/d is preferably controlled in the range of 3.0 to 10.0. If the value L/d is less than 3.0, the gas generating behaviors cannot be controlled as described above.

Although the length L of the pellet with the hole of the present invention is not particularly limited, it is preferably in the range of 1.5 to 30 mm. The outside diameter "D" is also not particularly limited, but in case of a single-hole form it is preferably in the range of 1.5 to 5.0 mm, 2.0 to 5.0 mm or 2.4 to 5.0 mm.

The pellets of gas propellant of the invention may have plural through-holes, but the position of each hole is not limited. A preferable embodiment is proposed for the stability of activity performance of the inflator.

It is preferable for two or more holes (nozzles) to be displaced in such an arrangement in the cross sectional plane to the longitudinal direction of the cylindrial pellet that a distance between the centers of two adjacent holes to each other and a distance between each center of these two holes and the outer end of the pellets are equal to each other.

A preferable example is a cylindrical pellet whose cross section is circular, as shown in Figure 20, having 7 through-holes. It is preferable that the center of one of the holes is placed at the center of the pellet's circle; the other 6 holes are placed in a ring surrounding the centric hole; the centers of the 6 surrounding holes are placed; a distance (b) between the centers of two adjacent holes of the surrounding holes to each other, a distance (c) between either centers of these two holes and a point of the outer end of the pellets are equal to each other and a distance (a) between the center of the centric hole and the respective centers of the surrouonding holes is equal to one another. Conveniently (a), (b) and (a) and (b), (c) and (c) form an equivalent regular triangle to each other. At the center of one hole, 6 regular triangles are arranged and the centers of 6 surrounding holes are displaced at the apexes of the regular triangles.

Another example of a pellet may have the center hole surrounded by 18 holes. The number and positions of the holes may be determined favorably in the same way as above. It can be decided in balance among the way of manufacturing, the manufacturing cost and the performance, which is not limited.

In the above case of the pellet with plural holes, preferably the outer diameter D is 4-50mm, the diameter of each through-hole is 0.4-1.0mm and the length L is 1.5-30 mm. The number of the through-holes is preferably 7, which is not limited when each hole is positioned as described above.

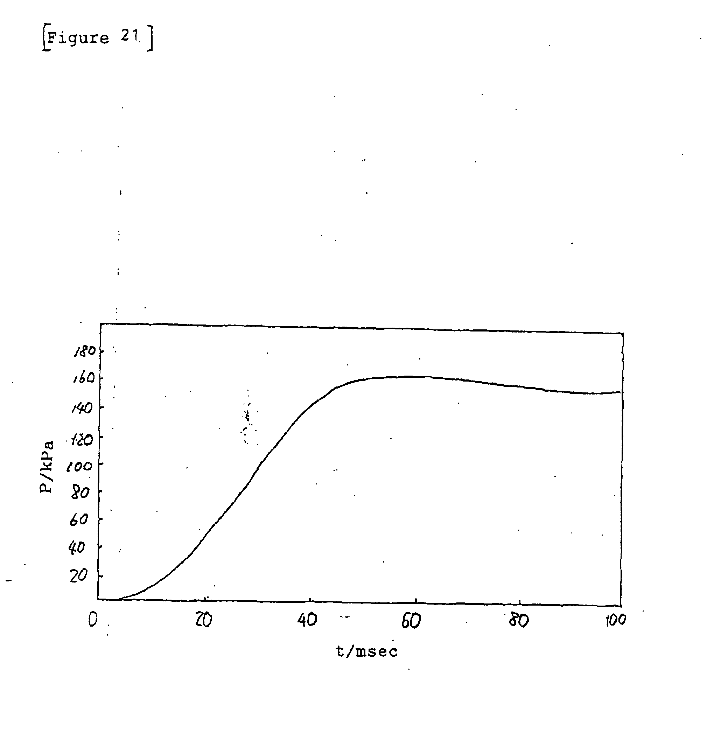

An example of evaluation of the 60ℓ tank at 20°C for an inflator including the pellets formed as above is shown below. In this case, the pellet has the outer diameter D is 6.5mm, the length L is 4mm and the diameter of each hole is about 0.7mm. The tank output curve is shown in Figure 21.

There will be now described one preferred method for manufacturing the pellets with holes according to the present invention. Initially, a mass of gas generating composition is produced by a kneading operation using a solvent for dissolving a binder, depending upon the grain size and bulk density of the material. The solvent should be selected from those suitable for dissolving the binder and suitable for forming the material into a desired shape. Water may be used as a solvent for dissolving a water-soluble binder, and an organic solvent, such as ether, ethyl acetate, or acetone, may be used for dissolving a binder that is soluble in an organic matter. The amount of the solvent used is controlled to provide a concentration suitable for forming the desired composition, which is preferably in the range of about 10 to 30% by weight with respect to the final amount of the gas generating composition. The order of mixing ingredients is not particularly specified, but may be preferably determined so that the pellets can be manufactured with greatest safety. Then, after an excessive solvent is removed when appropriate, the mass of the composition is passed through a metallic mold having a given shape that provides a cylindrical shape having a single bore, and extruded normally under a pressure of 40 to 80 kg/cm², or in some cases, 130 to 140 kg/cm² so as to form a string-shaped cylindrical body with a single bore. Before the surface of the string-shaped cylindrical body gets dried, the cylindrical body is cut by a cutter into a plurality of pellets having a suitable length so that the value L/d of each pellet is 3.0 or larger, and these pellets are then dried.

The gas generating material in the present invention preferably use a non-azide gas generating material, which preferably comprises a nitrogen containing compound, oxidizing agent, slag-forming agent and a binder or binders. The following slag-forming agent can be used as required.

The nitrogen-containing compound used in the present invention may be selected from the group consisting of triazole derivatives, tetrazole derivatives, guanidine derivatives, azodicarbonamide derivatives and hydrazine derivatives, and mixtures of two or more of these compounds. Specific examples of the nitrogen containing compound may include 5-oxo-1, 2, 4-triazole, tetrazole, 5-aminotetrazole, 5, 5'-bi-1H-tetrazole, guanidine, nitroguanidine, cyanoguanidine, triaminoguanidine nitrate, guanidine nitrate, guanidine carbonate, biuret, azodicarbonamide, carbohydrazide, complex of carbohydrazide nitrate, dihydrazide oxalate, complex of hydrazine nitrate and others.

Of these nitrogen containing compounds, one kind or at least two kinds selected from the group consisting of tetrazole derivatives and guanidine derivatives is/are preferably used, and nitroguanidine, cyanoguanidine and 5-aminotetrazole are particularly preferably used. The nitroguanidine having the least number of carbons in one molecule is most preferably used. Although either of low-specific-density nitroguanidine in the form of needle-like crystals, and high-specific-density nitroguanidine in the form of bulk-like crystals may be used as the nitroguanidine, the high-specific-density nitroguanidine is more preferably used in view of the safety and handling ease during manufacture of the pellets with a small amount of water. The content of the nitrogen containing compound in the gas generating material according to this invention is preferably in the range of 25-56% by weight, or more preferably in the range of 30-40% by weight, depending on the number of carbon elements, hydrogen elements and other oxidized elements in its molecular formula.

Although the absolute value of the content of the nitrogen containing compound differs depending on the type of the oxidizing agent in the gas generating material, the minor CO concentration in the generated gas increases when the absolute value is larger than the complete oxidation theoretical value, and the minor NOx concentration in the generated gas increases when the absolute value is equal to or smaller than the complete oxidation theoretical value. Accordingly, the content of the nitrogen containing compound is most preferably controlled in the range in which these concentrations are optimally balanced.

While various compounds may be used as the oxidizing agent in said gas generating material, the oxidizing agent is preferably selected from at least one kind of nitrates of alkali metal or alkali earth metal, which contain cation. Although oxidizing agents other than nitrates, namely, nitrites and perchlorates that are often used in the field of gas generators, may be used, the nitrate is preferably used since the number of oxygen in one molecule of nitrite is smaller than that of nitrate and the use of nitrate results in a reduced amount of micro-powder mist produced and thrown out of the airbag. The nitrates of alkali metals or alkali earth metals, which contain cation, may include sodium nitrate, potassium nitrate, magnesium nitrate, and strontium nitrate. Strontium nitrate is particularly preferred. Although the absolute value of the content of the oxidizing agent in the gas generating material varies depending on the kind and amount of the gas generating compound used, it is preferably in the range of 40-65% by weight, more preferably in the range of 45-60% by weight in view of the CO and NOx concentrations as described above.

The slag-forming agent in the gas generating compound has the function of converting a liquid form of an oxide of alkali metal or alkali earth metal produced by decomposition of the oxidizing agent in the gas generating compound into a solid form, so as to retain the oxide in the combustion chamber and prevent the oxide from being discharged in the form of mist out of the inflator. The optimum slag-forming agent can be selected according to the metal composition. More specifically, the slag-forming agent may be selected from at least natural clays containing aluminosilicate -- such as acid clay or Japanese acid clay, silica, bentonite and -- koalin -- artificial clays -- such as synthetic mica, synthetic kaolinite and synthetic smectite -- and talc as one kind minerals of water-containing magnesium silicate. Of these materials, acid clay and silica are preferred and acid clay is most preferred.

For example, an oxidizing mixture having three-component-system of calcium oxide produced from calcium nitrate, and aluminum oxide and silicon dioxide as major components of the clay has a viscosity that varies from 3.1 poise to about 1000 poise for the temperature range of 1350°C to 1550°C, depending on the ratio of these oxides in the composition, and also has a melting point that varies from 1350°C to 1450°C depending upon the composition. Utilizing these properties, the slag-forming agent can exhibit its slag-forming capability that suits for the mixing ratio of the gas generating material. The content of the slag-forming agent in the gas generating material may vary in the range of 1-20% by weight, more preferably in the range of 3-10% by weight. Too large a content of the slag-forming agent will result in a reduced linear burning rate and a lower gas generating efficiency. Too small a content will result in a poor slag-forming capability.

The binder is an essential component for forming a desired shape of pellets. Any type of binder may be used provided that it exhibits a viscous property in the presence of water or a solvent and that it does not have a significant adverse effect on the burning behaviors. Examples of the binder include polysaccharide derivatives, such as metallic salts of carboxymethyl cellulose, hydroxyethyl cellulose, cellulose acetate, cellulose propionate, cellulose acetate butyrate, nitrocellulose and starch. In particular, a water-soluble binder is preferred in view of the safety and handling ease in the manufacture, and a metallic salt, particularly sodium salt, of carboxymethyl cellulose is most preferred. The content of the binder in the gas generating material is preferably in the range of 3-12% by weight, more preferably in the range of 4-12% by weight. As the amount of the binder increases, the break strength of pellets increases but the number of carbon elements and hydrogen elements in the composition increases, increasing the concentration of the minor CO gas produced by incomplete combustion of carbon elements, degrading the quality of the generated gas, which is not desirable. When the content of the binder exceeds 12% by weight, the proportion of the oxidizing agent present relative to the binder needs to be increased, which in turn reduces the relative proportion of the gas generating compound, making it difficult to provide a practical gas generating system.

Further, where a sodium salt of carboxymethyl cellulose is used as the binder, it provides a secondary effect during the manufacture of pellets using water. Namely, sodium nitrate produced by transmetallation between sodium salt and nitrate, which is present in a microscopically mixed condition, reduces the decomposition temperature of the nitrate as the oxidizing agent, particularly that of strontium nitrate normally having a high decomposition temperature, thus improving the combustion characteristics. The preferred gas generating material used in the gas generator of this invention comprises:
(a) about 25-56% by weight, preferably 30-40% by weight, of nitroguanidine;
(b) about 40-65% by weight, preferably 45-65% by weight, of oxidizing agent;
(c) about 1-20% by weight, preferably 3-10% by weight, of slag-forming agent; and
(d) about 3-12% by weight, preferably 4-12% by weight, of binder.
A more preferred composition is:
(a) about 30-40% by weight of nitroguanidine;
(b) about 40-65% by weight of strontium nitrate;
(c) about 3-10% by weight of acid clay or silica; and
(d) about 4-12% by weight of sodium salt of carboxymethyl cellulose.

The preferred pellets of the gas generating material of this invention are made by molding the following compounds into the shape of a single-hole cylinder.
(a) about 25-56% by weight of nitroguanidine;
(b) about 40-65% by weight of oxidizing agent;
(c) about 1-20% by weight of slag-forming agent; and
(d) about 3-12% by weight of binder.

The gas generator can use appropriate structures and members advantageous for its operation. The structures and members useful in the activation of the gas generator include, for example: a "filter support member" installed between the inner cylinder member, which defines the ignition means accommodating chamber on its inner side, and the filter means to support the filter means; a "short path prevention means" enclosing the upper and/or lower end of the inner circumference of the filter means to prevent the generated gas from passing through a gap between the filter means and the inner surface of the housing; a "cushion member" arranged above and/or below the gas generating material to prevent the displacement of the gas generating material; a "perforated basket" of almost porous cylindrical shape arranged on the inner side of the filter means to prevent the direct contact between the gas generating material and the filter means and thereby protect the filter means against flames of the combustion gas generating material; and a "space" secured between the outer surface of the filter means and the sidewall inner surface of the housing to function as a gas passage.

The gas generator for airbag described above is accommodated in a module case, together with an airbag (bag body) that receives a gas generated by the gas generator and inflates, to form an airbag apparatus.

This airbag apparatus activates the gas generator in response to the impact sensor detecting impacts and discharges a combustion gas from the gas discharge ports of the housing. The combustion gas flows into the airbag, which is inflated by breaking the module cover, forming a shock-absorbing cushion between a hard structure of the vehicle and the passenger.

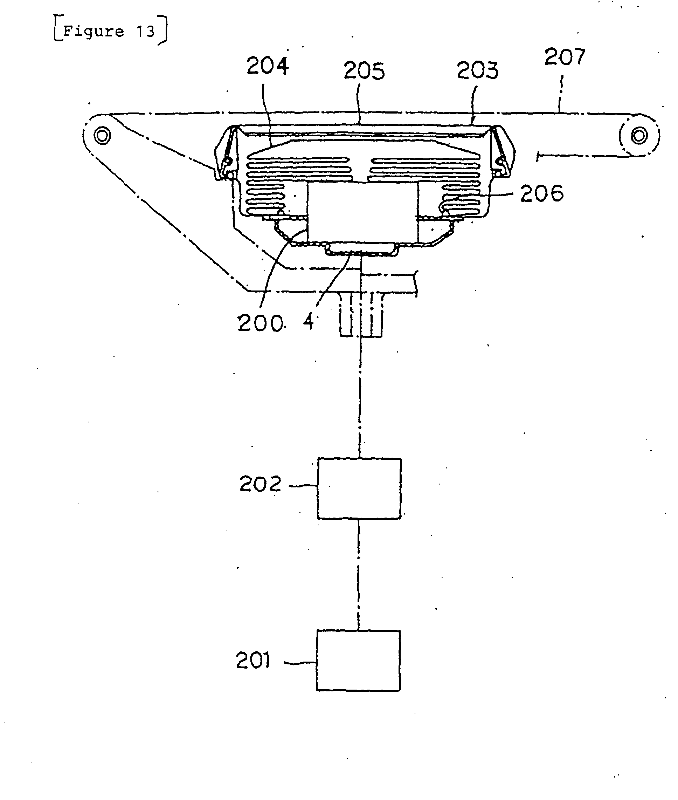

Figure 13 shows an embodiment of the airbag apparatus of this invention including the gas generator using an electric type ignition means.

This airbag apparatus includes a gas generator 200, an impact sensor 201, a control unit 202, a module case 203, and an airbag 204. The gas generator 200 uses the gas generator explained by referring to Figure 1 and has its operation performance adjusted so as to apply as small an impact as possible to the passenger at the initial stage of the gas generator operation.

The impact sensor 201 may be a semiconductor type acceleration sensor. The semiconductor type acceleration sensor has four bridge-connected semiconductor strain gauges attached on a beam of silicon substrate that deflects when subjected to an acceleration. When an acceleration is applied, the beam deflects causing strains on its surface, which in turn change the resistance of the semiconductor strain gauges to produce a voltage signal proportional to the acceleration.

The control unit 202 has an ignition decision circuit, which is supplied with a signal from the semiconductor type acceleration sensor. When the impact signal from the sensor 201 exceeds a predetermined level, the control unit 202 starts calculation. When the result of the calculation exceeds a predetermined value, the control unit outputs a trigger signal to the igniter 4 of the gas generator 200.

The module case 203 is formed of, for example, a polyurethane, and includes a module cover 205. The module case 203 accommodates the airbag 204 and the gas generator 200 to form a pad module. This pad module, when mounted on the driver's seat side, is normally installed in a steering wheel 207.

The airbag 204 is made of nylon (nylon 66, for example) or polyester with its bag inlet 206 enclosing the gas discharge ports of the gas generator. The airbag is folded and secured to the flange portion of the gas generator.

When the semiconductor type impact sensor 201 detects an impact at time of collision of an automobile, the impact signal is sent to the control unit 202, which, when the impact signal from the sensor exceeds a predetermined level, starts a calculation. If the result of the calculation exceeds a predetermined value, the control unit outputs a trigger signal to the igniter 4 of the gas generator 200. The igniter 4 is then activated to ignite the gas generating material to produce a gas, which is ejected into the airbag 204, causing the airbag to inflate by breaking the module cover 205 thus forming a shock-absorbing cushion between the steering wheel 207 and the passenger.

The gas generator uses the pellets of the present invention obtained as described above and is controlled so that, in a tank test conducted with respect to the gas generator, the tank pressure measured at 0.25 x T milliseconds is not higher than 0.25 x P (kPa), preferably not higher than 0.20 x P (kPa) and the tank pressure measured at 0.80 x T milliseconds is preferably not lower than 0.70 x P (kPa), where a given maximum pressure in the tank is P (kPa) and a period of time taken from the start of rising of the tank pressure to the time when the maximum tank pressure P (kPa) has been reached is T milliseconds.

The gas generator includes a housing having a plurality of gas discharge ports, an igniting means provided within the housing, a gas generating means ignited by the igniting means to generate a combustion gas, a combustion chamber including the gas generating means. And preferably the generator includes a filter means to cool the combustion gas and entrap combustion residues. Then the outer periphery of the filter means is further preferably placed to face the inner surface of the outer circumferential wall of the housing and to form a space or clearance therebetween.

In the tank test conducted with respect to the gas generator for the air bag system on the side of the D (driver) seat according to the present invention, the maximum tank pressure P (kPa) is generally in the range of 110 to 220 (kPa), and the time T, namely, the period of time from the start of rising of the tank pressure to the time, when the maximum tank pressure P (kPa) is reached, is generally, for example, in the range of 30 to 50 milliseconds. The present invention is also applicable to the gas generator of the air bag system to be used for the P (passenger) seat. In this case, the maximum pressure P (kPa) may be 350-500 (kPa), and the time T from the start of rising of the tank pressure to the time when the maximum tank pressure P (kPa) is reached may be, for example, in the range of 50 to 70 milliseconds.

Figure 16 is a vertical cross section of one embodiment of the gas generator (inflator) for the D (driver) seat using gas generating composition pellets (gas propellant) for an airbag system of the present invention.

The gas generator shown in this figure has a housing 3 comprising a diffuser shell 1 and a closure shell 2, the interior of which is divided by an inner cylinder member 16 into two compartments, an ignition means-accommodating chamber 23 and a gas generating material-combusting chamber 28. The ignition means-accommodating chamber 23 accommodates an ignitor 4 and a transfer charge 5 as the ignition means that will be triggered by impacts to ignite and burn a gas generating material 6. The combustion chamber 28 accommodates the gas generating composition pellets 6 of the present invention to be ignited and burned by said ignition means and to generate a combustion gas and then an under plate 24 of an almost orbicular shape that supports and blocks the displacement of the gas generating composition pellets 6. The circumferential wall portion 10 of the diffuser shell 1 has a plurality of gas discharge ports 11 arranged at regular intervals at the circumferential direction and sealed by a seal tape 52. The closure shell 2 has an inner cylinder member 16 inserted and fitted in the center hole 15. The diffuser shell 1 and the closure shell 2 are combined to form the housing 3 by being faced at the flange portions 19, 20 around a position on a lateral plane crossing the center of the axis of the housing 3, being welded with laser beam.

The end of the inner cylinder member 16 on the side accommodating the igniter 4 is formed with a crimping portion 27 that holds the igniter 4 immovable. The circumferential wall of the inner cylinder member 16 has a plurality of through-holes 54 provided at regular intervals toward the combustion chamber 28 and closed by seal tape 52'. Further a coolant/ filter 7 installed in the housing 1 to clean and cool the gas produced by the ignition and combustion of the gas generating composition pellets 6 is arranged to enclose the gas generating composition pellets 6 to form an annular chamber around the inner cylinder member 16, i.e., the gas generating material combustion chamber 28.

The coolant/filter is formed by radially stacking plain-woven meshes of stainless steel wire and compressing them radially and axially. And on the outer side of the coolant/filter 7 is provided an outer layer 29 which works as a swell-suppressing layer to prevent the coolant/filter 7 from swelling. A space 9 which functions as a gas passage is formed between the outer circumferntial wall 8 and the coolant/filter 7. On the inner circumference of the coolant/filter 7 is installed an almost cylindrical perforated basket 32 which protects the coolant/filter 7 against flames of the burning gas generating material and prevents a direct contact between the gas generating composition pellets 6 and the coolant/filter 7. In the inside of the gas generating material-accommodating chamber 28 defined on the outside of the inner cylinder member 16 in the housing 3, in addition to the gas generating material, is installed an under plate 24 having an almost orbicular shape which supports the gas generating composition pellets 6 and prevents displacement thereof. The under plate 24 comprises a circular portion 25 contacting the gas generating composition pellets 6 and a central hole 26 into which is inserted the outer circumferntial wall of the inner cylinder member 16. The gas generating composition pellets 6 supported by a cushion 25' on the circular portion 25 is prevented from moving, being smashed into pieces and changing in its surface area. Then the outer layer 29, the space 9 and the perforated basket 32 as mentioned above may be provided according to need, but may be omitted. In Fig. 1, the numeral reference to 17 is a cylinder color member 16 with a groove 18 and the reference to 18 is an O-ring accommodated in the groove 18.

### Example 1

Water was added to 31 parts (hereinafter, "parts" means "parts by weight") of nitroguanidine, in an amount corresponding to 15 parts with respect to the whole amount of the composition, and they were mixed and kneaded together. Separately, 54 parts of strontium nitrate, 5 parts of acid clay, and 10 parts of sodium salt of carboxymethyl cellulose were dry mixed, and the above wet mixed powder was added to this mixture, and further kneaded. The thus kneaded mixture was passed through a metallic mold having an outside diameter of 3.2 mm, and an inside diameter of 0.80 mm, and extruded under a pressure of 80 kg/cm², so as to form a string-shaped, cylindrical body with a single bore. Then, this string-shaped body was cut into pellets each having a length of 4.0 mm, which were then sufficiently dried, to thus provide gas generating pellets.

With respect to a gas generator having 37g of the thus obtained gas generating pellets, a tank test was conducted at room temperature, using a tank having a content volume of 60 liters.

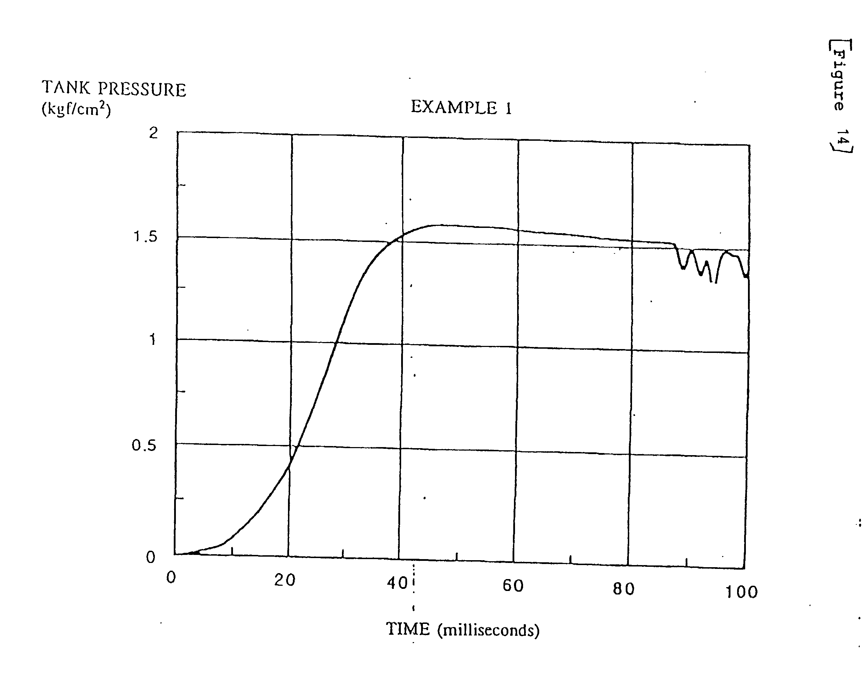

The pressure-time curve obtained in the tank test is shown in Fig. 14, and numerical result of the evaluation with respect to L/d of gas generating pellet is summarized in TABLE 1.

As is apparent from the test result and Fig. 14, the tank pressure represented by the time-pressure curve increases gently or moderately in the initial period, and still reaches the maximum pressure within the desired time.

The interior of the tank was considerably clean, and the concentrations of slight amounts of gases, such as CO and NOx, were within the limits required by automobile manufacturers.

### Examples 2, 3

Gas generating pellets were obtained in the same manner as in Example 1, except that the string-shaped body was cut by a cutter into different lengths as indicated in TABLE 1. The obtained gas generating pellets were evaluated in the same manner as in Example 1. The results of the evaluation are shown in TABLE 1.

### Comparative Example 1

Gas generating pellets were obtained in the same manner as in Example 1, except that the string-shaped body was cut by a cutter into a length of 2.0 mm. The obtained gas generating pellets were evaluated in the same manner as in Example 1. The results of the evaluation are shown in TABLE 1.

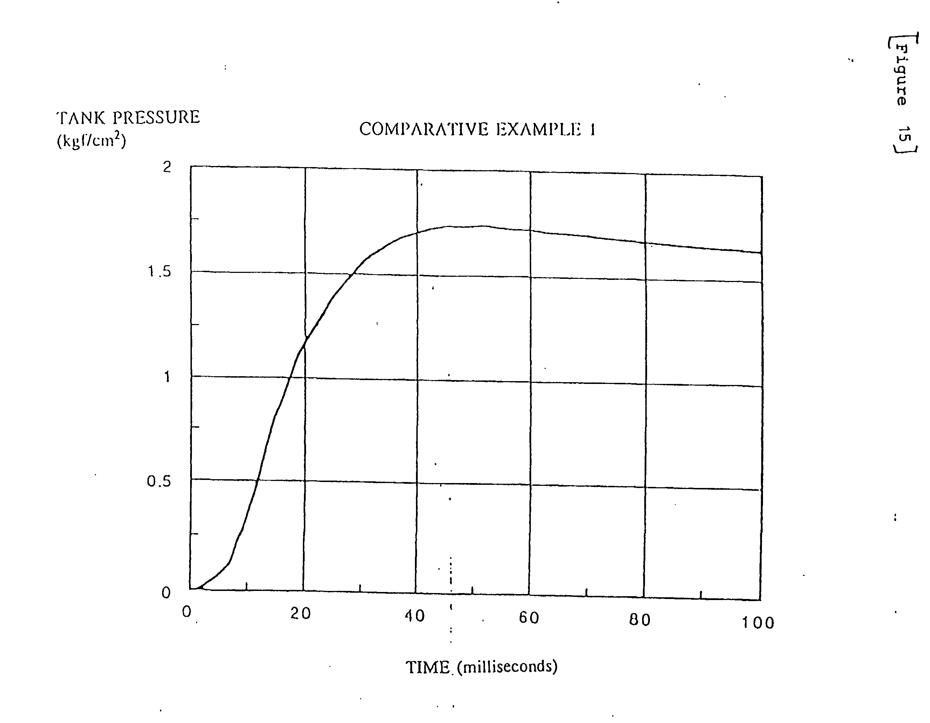

The pressure-time curve obtained in the tank test is shown in Fig. 15.

As is apparent from the above test results and Fig. 15, it will be understood that the tank pressure represented by the curve in Fig. 15 exceeds a desired level when it increases in the initial ignition period, and the more rapid increase in the pressure compared to Example 1 results in a higher possibility that the passenger is injured by the air bag system having this gas generator.

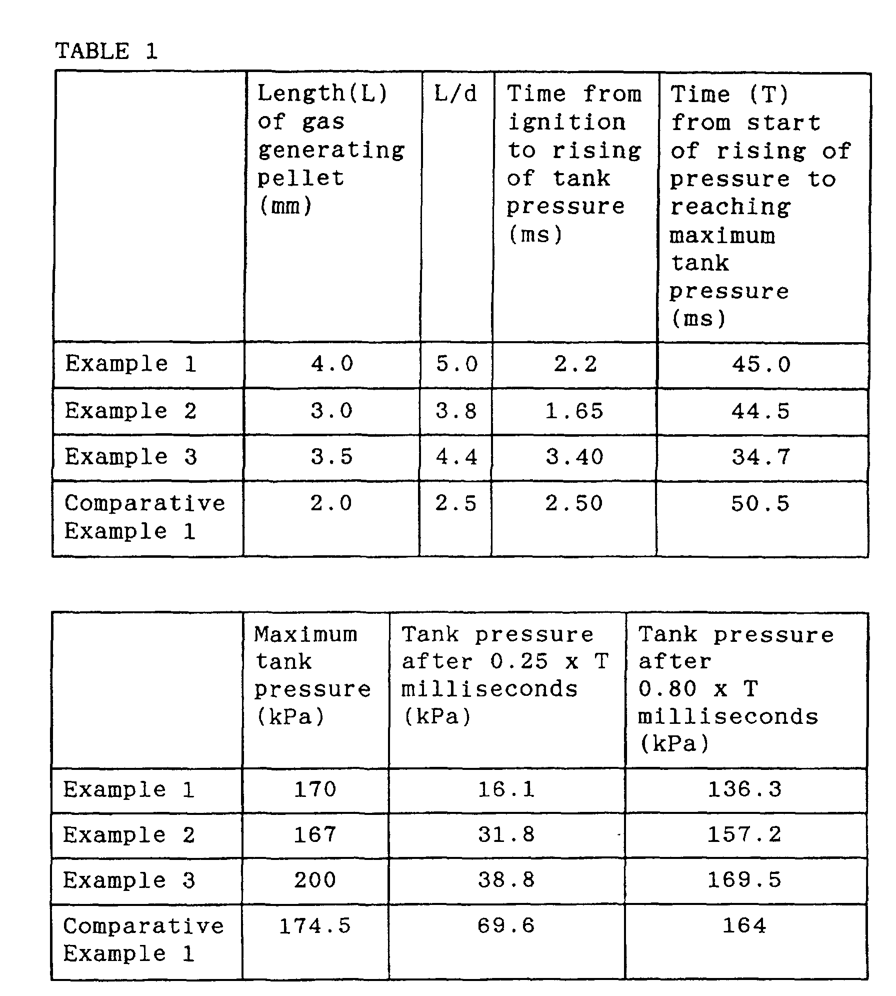

## Claims

1. Pellets molded from a gas generating composition for an air bag system, formed so that, in the tank test for an inflator including the pellets, the tank pressure measured at 0.25 x T milliseconds is not higher than 0.25 x P when a given maximum tank pressure is P, and a period of time from the start of rising of the tank pressure to the time when the maximum tank pressure P has been reached is T milliseconds, wherein the pellets are made of a non-azide gas generating composition, formed with more than one hole, each hole having an inside diameter d of 0.2 to 1.5 mm, a ratio of Ud being 3.0 or larger, L being a length of each hole.

2. Pellets according to claim 1, wherein the inside diameter d is from 0.4 to 1.0 mm.

3. Pellets according to claim 1 or 2, wherein the ratio Ud is 10.0 or less.

4. Pellets according to at least one of claims 1 to 3, wherein the length L is in a range of 1.5 to 30 mm.

5. Pellets according to at least one of claims 1 to 4, wherein an outside diameter D of the pellets is in a range of 4 to 50 mm.

6. Pellets according to at least one of claims 1 to 5, wherein the holes are displaced in such an arrangement in the cross sectional plane that a distance between the centers of two adjacent holes to each other and a distance between each center of these holes and the outer circumference of the pellets are equal to each other.

7. Pellets according to at least one of claims 1 to 6, wherein the pellets have a circular cross section.

8. Pellets according to claim 7, wherein one centric hole is placed at the center of the circular cross section and six further holes are placed in a circumferential direction surrounding said centric hole.

9. Pellets according to claim 8, wherein at the center of the centric hole, six regular imaginary triangles are arranged wherein the centers of the six further holes are displaced at the apexes of said triangles.

10. Pellets according to at least one of the claims 1 to 9, wherein the pellets are adapted such that the tank pressure measured at 0.80 x T milliseconds is not lower than 0.70 x P.

11. Pellets according to at least one of claims 1 to 10, wherein the pellets are adapted such that the tank pressure measured at 0.25 x T milliseconds is not higher than 0.20 x P.

12. Pellets according to at least one of claims 1 to 11, wherein said non-azide gas generating composition comprises a nitrogen-containing compound, an oxidizing agent, a slag-forming agent and a binder.

13. Pellets according to claim 12, wherein said nitrogen-containing compound is at least one compound selected from the group consisting of tetrazole derivatives and guanidine derivatives.

14. Pellets according to claim 11, wherein said non-azide gas generating composition comprises nitroguanidine or 5-aminotetrazole, strontium nitrate, silica or acid clay, and sodium salt of carboxymethyl cellulose.

15. Pellets according to at least one of claims 12 to 14, wherein said non-azide gas generating composition comprises:
(a) about 25 - 56 wt% of nitroguanidine,
(b) about 40 - 65 wt% of an oxidizing agent,
(c) about 1 - 20 wt% of a slag-forming agent, and
(d) about 3-12 wt% of a binder.

16. Pellets according to claim 14, wherein said non-azide gas generating composition comprises:
a) about 30 - 40wt% of nitroguanidine,
b) about 40 - 65wt% of strontium nitrate,
c) about 3 - 10wt% of acid clay or silica, and
d) about 4 - 12wt% of sodium salt of carboxymethyl cellulose.

17. Inflator for an air bag system accommodating the gas generating pellets according to any one of the preceding claims.

18. Inflator according to claim 17, wherein the inflator includes a housing (3) having a plurality of gas discharge ports (11), an igniting means (4,5) provided within said housing (3), which ignite said pellets to generate a combustion gas, and a combustion chamber (28) containing said pellets.

19. Inflator according to claim 18, wherein the maximum tank pressure P is in the range of 110 to 220 kPa and the period of time T from the start of rising of the tank pressure to the time when the maximum tank pressure P has been reached is 30 to 50 milliseconds.

20. Air bag system comprising:
a gas generating composition pellets according to any of claims 1 to 16;
an impact sensor (201) to detect an impact and activate the gas generating composition;
an air bag (204) to inflate by receiving the gas produced by said gas generating composition; and
a module case (203) to accommodate said air bag (204).

## Patentansprüche

1. Pellets, geformt aus einer gaserzeugenden Zusammensetzung für ein Airbag-System, gebildet so, dass, in dem Behälter-Test für eine Aufblaseinrichtung, umfassend die Pellets, der Behälterdruck, gemessen bei 0,25 x T Millisekunden, nicht höher als 0,25 x P ist, wenn ein gegebener, maximaler Behälterdruck P ist, und eine Zeitperiode von dem Beginn eines Anstiegs des Behälterdrucks an bis zu der Zeit, zu der der maximale Behälterdruck P erreicht worden ist, T Millisekunden beträgt, wobei die Pellets aus einer ein Nicht-Azid-Gas erzeugenden Zusammensetzung hergestellt sind, ausgebildet mit mehr als einem Loch, wobei jedes Loch einen Innendurchmesser d von 0,2 bis 1,5 mm besitzt, wobei ein Verhältnis von L/d 3,0 oder größer ist, wobei L eine Länge jedes Lochs ist.

2. Pellets nach Anspruch 1, wobei der Innendurchmesser von 0,4 bis 1,0 mm reicht.

3. Pellets nach Anspruch 1 oder 2, wobei das Verhältnis L/d 10,0 oder geringer ist.

4. Pellets nach mindestens einem der Ansprüche 1 bis 3, wobei die Länge L in einem Bereich von 1,5 bis 30 mm liegt.

5. Pellets nach mindestens einem der Ansprüche 1 bis 4, wobei ein Außendurchmesser D der Pellets in einem Bereich von 4 bis 50 mm liegt.

6. Pellets nach mindestens einem der Ansprüche 1 bis 5, wobei die Löcher in einer solchen Anordnung in der Querschnittsebene verschoben sind, dass ein Abstand zwischen den Mitten von zwei angrenzenden Löchern zueinander und ein Abstand zwischen jeder Mitte dieser Löcher und dem äußeren Umfang der Pellets gleich zueinander sind.

7. Pellets nach mindestens einem der Ansprüche 1 bis 6, wobei die Pellets einen kreisförmigen Querschnitt haben.

8. Pellets nach Anspruch 7, wobei ein zentrisches Loch an der Mitte des kreisförmigen Querschnitts platziert ist und sechs weitere Löcher in einer Umfangsrichtung, das zentrische Loch umgebend, platziert sind.

9. Pellets nach Anspruch 8, wobei an der Mitte des zentrischen Lochs sechs imaginäre, gleichförmige Dreiecke angeordnet sind, wobei die Mitten der sechs weiteren Löcher an den Scheitelpunkten der Dreiecke versetzt sind.

10. Pellets nach mindestens einem der Ansprüche 1 bis 9, wobei die Pellets so angepasst sind, dass der Behälterdruck, gemessen bei 0,80 x T Millisekunden, nicht niedriger als 0,70 x P ist.

11. Pellets nach mindestens einem der Ansprüche 1 bis 10, wobei die Pellets so angepasst sind, dass der Behälterdruck, gemessen bei 0,25 x T Millisekunden, nicht höher als 0,20 x P ist.

12. Pellets nach mindestens einem der Ansprüche 1 bis 11, wobei die das Nicht-Azid-Gas erzeugende Zusammensetzung eine Stickstoff enthaltende Verbindung, ein oxidierendes Mittel, ein eine Schlacke bildendes Mittel und ein Bindemittel aufweist.

13. Pellets nach Anspruch 12, wobei die Stickstoff enthaltende Verbindung mindestens eine Verbindung ist, die aus der Gruppe ausgewählt ist, die aus Tetrazol-Derivaten und Guanidin-Derivaten besteht.

14. Pellets nach Anspruch 11, wobei die das Nicht-Azid-Gas erzeugende Zusammensetzung Nitroguanidin oder 5-Aminotetrazol, Strontiumnitrat, Siliziumdioxid oder saure Tonerde, und Natriumsalz von Carboxymethylzellulose, aufweist.

15. Pellets nach mindestens einem der Ansprüche 12 bis 14, wobei die das Nicht-Azid-Gas erzeugende Zusammensetzung aufweist:
(a) ungefähr 25 - 56 Gew.-% an Nitroguanidin,
(b) ungefähr 40 - 65 Gew.-% eines oxidierenden Mittels,
(c) ungefähr 1-20 Gew.-% eines eine Schlacke bildenden Mittels, und
(d) ungefähr 3-12 Gew.-% eines Bindemittels.

16. Pellets nach Anspruch 14, wobei die das Nicht-Azid-Gas erzeugende Zusammensetzung aufweist:
(a) ungefähr 30 - 40 Gew.-% an Nitroguanidin,
(b) ungefähr 40 - 65 Gew.-% an Strontiumnitrat,
(c) ungefähr 3-10 Gew.-% an saurer Tonerde oder an Siliziumdioxid, und
(d) ungefähr 4-12 Gew.-% an Natriumsalz von Carboxymethylzellulose.

17. Gasgenerator für ein Airbag-System, der die gaserzeugenden Pellets gemäß einem der vohergehenden Ansprüche aufnimmt.

18. Gasgenerator nach Anspruch 17, wobei der Gasgenerator ein Gehäuse (3), das eine Mehrzahl von Gasaustassöffnungen (11) besitzt, eine Zündeinrichtung (4, 5), vorgesehen innerhalb des Gehäuses (3), die die Pellets zündet, um ein Verbrennungsgas zu erzeugen, und eine Verbrennungskammer (28), die die Pellets enthält, umfasst.

19. Gasgenerator nach Anspruch 18, wobei der maximale Behälterdruck P in dem Bereich von 110 bis 220 kPa liegt und die Zeitperiode T von dem Beginn eines Anstiegs des Behälterdrucks an bis zu der Zeit, zu der der maximale Behälterdruck P erreicht worden ist, 30 bis 50 Millisekunden beträgt.

20. Airbag-System, das aufweist:
Pellets einer gaserzeugenden Zusammensetzung nach einem der Ansprüche 1 bis 16;
einen Aufprallsensor (201), um einen Aufprall zu erfassen und die gaserzeugende Zusammensetzung zu aktivieren;
einen Airbag (204), der durch Aufnehmen des Gases, erzeugt durch die gaserzeugende Zusammensetzung, aufgeblasen wird; und
ein Modulgehäuse (203), um den Airbag (204) aufzunehmen.

## Revendications

1. Pastilles moulées à partir d'une composition génératrice de gaz, pour un système de coussin de sécurité gonflable, formées de telle manière que, dans le bac d'essai pour un dispositif de gonflage, incluant les pastilles, la pression dans le bac mesurée à 0,25 x T millisecondes, n'est pas supérieure à 0,25 x P, lorsqu'une pression dans le bac maximale donnée est P, et un laps de temps, entre le début de l'élévation de la pression dans le bac, et le moment où la pression dans le bac maximale P a été atteinte, est T millisecondes, dans lesquelles les pastilles sont constituées d'une composition génératrice de gaz ne contenant pas d'azide, et formées avec plus d'un trou, chaque trou ayant un diamètre intérieur d de 0,2 à 1,5 mm, un rapport L/d étant égal ou supérieur à 3,0, L étant une longueur de chaque trou.

2. Pastilles selon la revendication 1, dans lesquelles le diamètre intérieur est compris entre 0,4 et 1,0 mm.

3. Pastilles selon la revendication 1 ou 2, dans lesquelles le rapport L/d est de 10,0, voire moins.

4. Pastilles selon au moins l'une des revendications 1 à 3, dans lesquelles la longueur L est comprise dans une fourchette de 1,5 à 30 mm.

5. Pastilles selon au moins l'une des revendications 1 à 4, dans lesquelles un diamètre extérieur D des pastilles est compris dans une fourchette de 4 à 50 mm.

6. Pastilles selon au moins l'une des revendications 1 à 5, dans lesquelles les trous sont déplacés dans un agencement, dans le plan de coupe transversale, tel qu'une distance entre les centres de deux trous adjacents l'un par rapport à l'autre, et une distance entre chaque centre de ces trous et la circonférence extérieure des pastilles sont égales l'une à l'autre.

7. Pastilles selon au moins l'une des revendications 1 à 6, dans lesquelles les pastilles ont une coupe transversale circulaire.

8. Pastilles selon la revendication 7, dans lesquelles un trou central est placé au centre de la coupe transversale circulaire et six autres trous sont placés dans la direction de la circonférence qui entoure ledit trou central.

9. Pastilles selon la revendication 8, dans lesquelles, au centre du trou central, six triangles imaginaires sont agencés, les centres de six autres trous étant déplacés, au sommet desdits triangles.

10. Pastilles selon au moins l'une des revendications 1 à 9, dans lesquelles les pastilles sont conçues de telle façon que la pression dans le bac, mesurée à 0,80 x T millisecondes, n'est pas inférieure à 0,70 x P.

11. Pastilles selon au moins l'une des revendications 1 à 10, dans lesquelles les pastilles sont conçues de telle façon que la pression dans le bac, mesurée à 0,25 x T millisecondes, n'est pas supérieure à 0,20 x P.

12. Pastilles selon au moins l'une des revendications 1 à 11, dans lesquelles ladite composition génératrice de gaz ne contenant pas d'azide comprend un composé contenant de l'azote, un agent oxydant, un agent de formation de laitier et un liant.

13. Pastilles selon la revendication 12, dans lesquelles ledit composé contenant de l'azote est au moins un composé choisi dans le groupe consistant en les dérivés de tétrazole et les dérivés de guanidine.

14. Pastilles selon la revendication 11, dans lesquelles ladite composition ne contenant pas d'azide comprend de la nitroguanidine ou du 5-aminotétrazole, du nitrate de strontium, de la silice ou de l'argile acide, et du sel de sodium de carboxyméthylcellulose.

15. Pastilles selon au moins l'une des revendications 12 à 14, dans lesquelles ladite composition ne contenant pas d'azide comprend :
(a) environ 25 à 56 % en poids de nitroguanidine,
(b) environ 40 à 65 % en poids d'un agent oxydant,
(c) environ 1 à 20 % en poids d'un agent de formation de laitier, et
(d) environ 3 à 12 % en poids d'un liant.

16. Pastilles selon la revendication 14, dans lesquelles ladite composition ne contenant pas d'azide comprend :
(a) environ 30 à 40 % en poids de nitroguanidine,
(b) environ 40 à 65 % en poids de nitrate de strontium,
(c) environ 3 à 10 % en poids d'une argile acide ou de silice, et
(d) environ 4 à 12 % en poids de sel de sodium de carboxyméthylcellulose.

17. Dispositif de gonflage pour un système de coussin de sécurité gonflable accueillant les pastilles génératrices de gaz selon l'une quelconque des revendications précédentes.

18. Dispositif de gonflage selon la revendication 17, dans lequel le dispositif de gonflage comporte un boîtier (3) présentant une pluralité d'orifices d'évacuation du gaz (11), un moyen d'allumage (4, 5), fourni à l'intérieur dudit boîtier (3), qui allume lesdites pastilles afin de générer un gaz de combustion, et une chambre de combustion (28) contenant lesdites pastilles.

19. Dispositif de gonflage selon la revendication 18, dans lequel la pression dans le bac maximale P se trouve dans la fourchette comprise entre 110 et 220 kPa, et le laps de temps T entre le début de l'élévation de la pression dans le bac et le moment où la pression dans le bac maximale P a été atteinte est de 30 à 50 millisecondes.

20. Système de coussin de sécurité gonflable comprenant :
des pastilles constituées d'une composition génératrice de gaz selon l'une quelconque des revendications 1 à 16 ;
un détecteur d'impact (201) permettant de détecter un impact et d'activer la composition génératrice de gaz ;
un coussin de sécurité gonflable (204) gonflant à réception du gaz produit par ladite composition génératrice de gaz ; et
un étui de module (203) permettant d'accueillir ledit coussin de sécurité gonflable (204).
